# FASCICULE DE BREVET EUROPEEN

(11) **EP 3 090 240 B1**
(45) Date de publication et mention de la délivrance du brevet: **28.11.2018**
(21) Numéro de dépôt: 14831036.0
(22) Date de dépôt: 29.12.2014
(51) Int. Cl.: G01K 17/20

(54) **PROCÉDÉ ET DISPOSITIF DE DÉTERMINATION DU COEFFICIENT DE DÉPERDITION THERMIQUE D'UN LOCAL**
VERFAHREN UND VORRICHTUNG ZUR BESTIMMUNG DER WÄRMEVERLUSTKOEFFIZIENTEN EINES RAUMES
METHOD AND DEVICE FOR DETERMINING THE HEAT LOSS COEFFICIENT OF A ROOM

(30) Priorité: 30.12.2013 FR 1363712
(43) Date de publication de la demande: 09.11.2016
(73) Titulaire: Saint-Gobain Isover, 92400 Courbevoie (FR)
(72) Inventeur: PANDRAUD, Guillaume, F-75011 Paris (FR); ALZETTO, Florent, F-92300 Levallois Perret (FR)
(74) Mandataire: Saint-Gobain Recherche
(86) Numéro de dépôt international: PCT/FR2014/053571
(87) Numéro de publication internationale: WO 2015/101751

(56) Documents cités:
- EP-A1- 0 852 331
- EP-A2- 2 674 737
- WO-A1-2012/028829

## Description

La présente invention a trait à un procédé et un dispositif pour déterminer le coefficient de déperdition thermique d'un local. Au sens de l'invention, un local est une maison individuelle ou un bâtiment, notamment à usage d'habitation ou tertiaire, ou encore une partie d'un tel bâtiment, par exemple un appartement dans un immeuble à plusieurs étages.

Le coefficient de déperdition thermique d'un local, noté *K,* est égal à la puissance de déperdition thermique du local (en Watts) par degré (Kelvin ou Celsius) d'écart entre la température de l'air à l'intérieur du local et la température de l'air extérieur. Ce coefficient *K* est représentatif des performances énergétiques de l'enveloppe du local.

Le coefficient de déperdition thermique *K* d'un local est influencé, d'une part, par les pertes thermiques par transmission à travers les parois du local et, d'autre part, par les infiltrations d'air. Les pertes thermiques par transmission sont représentées par un facteur H_{T} = UA_{T}, où U est le coefficient de transmission thermique de l'enveloppe du local, également appelé coefficient de déperdition spécifique par transmission du local, et A_{T} est la surface totale des parois du local. Les infiltrations d'air dans le local sont représentées par un facteur m'.Cp, où m' est le débit de renouvellement de l'air et Cp est la capacité calorifique de l'air. Par conséquent, le coefficient de déperdition thermique *K* est donné par la relation : $K = {H}_{T} + m ′ .Cp = {UA}_{T} + m ′ . Cp .$

Le coefficient U est utilisé, dans le cadre de réglementations thermiques telles que la RT 2005 en France ou le règlement EnEV en Allemagne, pour accéder à une estimation de la consommation globale d'énergie du local. Sa détermination est utile pour effectuer un diagnostic de l'isolation thermique d'un local, en particulier après sa construction, pour vérifier que le constructeur a respecté les normes en vigueur en termes d'isolation thermique aussi bien en ce qui concerne le choix des matériaux que leur mise en oeuvre, ou lorsqu'on envisage une réhabilitation du local, en vue d'évaluer les mesures qu'il convient de prendre pour améliorer la performance thermique.

WO 2012/028829 A1 décrit un procédé de détermination du coefficient de déperdition thermique *K* d'un local, dans lequel on utilise les variations transitoires de la température intérieure du local lorsqu'il est soumis à des sollicitations internes contrôlées et dans un environnement externe mesuré. Par une analyse quantitative de la variation de la température intérieure du local, que l'on obtient par des mesures in situ, il est possible de déterminer quantitativement la qualité énergétique du local sur une période relativement courte, ce qui permet de s'affranchir de l'influence des conditions d'utilisation du local et des variations des conditions climatiques extérieures. En pratique, il a été démontré que ce procédé fournit de bons résultats lorsqu'il est mis en oeuvre avec un temps de mesure correspondant à deux nuits consécutives. La réduction du temps de mesure est toutefois délicate. En particulier, il est apparu que l'erreur sur la valeur du coefficient de déperdition thermique *K* est susceptible d'augmenter lorsque le temps de mesure diminue.

C'est à ces inconvénients qu'entend plus particulièrement remédier l'invention en proposant un procédé et un dispositif permettant de déterminer le coefficient de déperdition thermique d'un local sur un temps court, notamment sur une seule nuit ou même sur quelques heures, avec une bonne précision, notamment de l'ordre de ± 20%.

A cet effet, l'invention a pour objet un procédé de détermination du coefficient de déperdition thermique *K* d'un local, caractérisé en ce qu'il comprend des étapes comme définies dans la revendication 1, dans lesquelles :
- on procède, dans le local, sur deux périodes de temps *D*₁ et *D*₂ successives :
   i. sur la première période de temps *D*₁, à l'application d'une première puissance de chauffe *P*₁ du local, et à une campagne de mesures d'au moins une température à l'intérieur du local *T*_{*i*1} à intervalles de temps rapprochés, ainsi qu'à la détermination de la température de l'air extérieur *T*ₑ₁ à intervalles de temps rapprochés, la première puissance de chauffe *P*₁ étant telle que le paramètre $α = 1 - \frac{Δ {T}_{1} \left(0\right) {K}_{ref}}{{P}_{1}}$ est inférieur ou égal à 0,8 avec Δ*T*₁(0) = *T*_{*i*1}(*t*=0) - *Tₑₘ*, où *t* = 0 est le point de départ de la première période de temps *D*₁, *Tₑₘ* est la température moyenne de l'air extérieur sur l'ensemble des périodes de temps *D*₁ et *D*₂, et *K_{ref}* est une valeur de référence du coefficient de déperdition thermique K du local, puis
   ii. sur la deuxième période de temps *D*₂, à l'application d'une deuxième puissance de chauffe *P*₂ du local sensiblement nulle, de manière à laisser la température à l'intérieur du local *T*_{*i*1} évoluer librement, et à une campagne de mesures d'au moins une température à l'intérieur du local *T*_{*i*2} à intervalles de temps rapprochés, ainsi qu'à la détermination de la température de l'air extérieur *T*_{*e*2} à intervalles de temps rapprochés ;
- pour chacune des première et deuxième périodes de temps *D*₁ et *D*₂, on sélectionne un intervalle de temps Δ*t*₁ ou Δ*t*₂ pour lequel l'évolution *T*_{*i*1}(*t*) ou *T*_{*i*2}(*t*) est sensiblement linéaire, où les intervalles de temps Δ*t*₁ et Δ*t*₂ sont tels que l'intervalle de temps Δ*t*₁ s'étend jusqu'à la fin de la première période *D*₁ d'application de la première puissance de chauffe *P*₁ et tels que, lorsqu'on superpose les points de départ de la première période *D*₁ et de la deuxième période *D*₂, les intervalles de temps Δ*t*₁ et Δ*t*₂ ont le même point de fin ;
- on détermine, sur chaque intervalle de temps Δ*t*₁ ou Δ*t*₂, la pente *a*₁ ou *a*₂ de la tangente à la courbe (*Tᵢₖ*(*t*))_{*k* = 1 ou 2} ;
- on déduit la valeur *K_{calc}* du coefficient de déperdition thermique *K* du local à partir des pentes *a*₁ et *a*₂.

De préférence, les intervalles de temps Δ*t*₁ et Δ*t*₂ ont la même durée.

Bien entendu, le procédé selon l'invention ne requiert pas nécessairement la mise en place d'une représentation graphique de l'évolution *Tᵢₖ*(*t*)*.*

En particulier, sur chaque intervalle de temps Δ*tₖ*, la pente *aₖ* de la tangente à la courbe *Tᵢₖ*(*t*) est égale à la dérivée de l'évolution *Tᵢₖ*(*t*) sur l'intervalle Δ*tₖ*. Dès lors, l'étape de détermination de la pente *aₖ* de la tangente à la courbe *Tᵢₖ*(*t*) sur l'intervalle de temps Δ*tₖ* peut être réalisée, dans le cadre de l'invention, en calculant la dérivée de l'évolution *Tᵢₖ*(*t*) sur l'intervalle de temps Δ*tₖ*, sans recourir à une représentation graphique de l'évolution *Tᵢₖ*(*t*)*.*

Les étapes de calcul du procédé, en particulier pour la détermination des pentes *aₖ*, peuvent être mises en oeuvre à l'aide de tout moyen de calcul approprié. Il peut s'agir notamment d'une unité de calcul électronique qui est reliée à un système d'acquisition pour acquérir les mesures requises par le procédé et qui comporte des moyens de calcul pour exécuter tout ou partie des étapes de calcul du procédé à partir des mesures acquises.

Dans le cadre de l'invention, on entend par "puissance de chauffe du local" toute condition opératoire générant une variation de la température intérieure du local pour des conditions de température extérieure données. Il est entendu que la puissance de chauffe peut être positive, nulle ou négative. Une puissance de chauffe positive correspond à un apport de chaleur dans le local, alors qu'une puissance de chauffe négative correspond à un apport de froid dans le local.

Suivant l'invention, il est prévu que la première puissance de chauffe *P*₁ est une puissance strictement positive ou strictement négative propre à générer une évolution forcée de la température à l'intérieur du local, alors que la deuxième puissance de chauffe *P*₂ est une puissance sensiblement nulle. Au sens de l'invention, une puissance de chauffe est dite sensiblement nulle lorsqu'elle autorise une évolution libre de la température à l'intérieur du local. En général, la deuxième puissance de chauffe *P*₂ n'est pas strictement nulle, du fait notamment de la présence dans le local de matériels de mesure ou de calcul, qui sont utilisés pour la mise en oeuvre du procédé et qui génèrent en fonctionnement une puissance de chauffe résiduelle. Dans le cas d'une puissance de chauffe sensiblement nulle, la variation de la température intérieure du local peut résulter d'une différence entre la température intérieure du local et la température extérieure, ou encore d'une variation de la température extérieure.

L'invention repose sur la sélection d'une sollicitation thermique spécifique du local permettant d'accéder à son coefficient de déperdition thermique avec une bonne précision et sur un temps réduit, cette sollicitation thermique spécifique étant l'application d'une première puissance de chauffe *P*₁ strictement positive ou strictement négative propre à générer une évolution forcée de la température à l'intérieur du local, suivie de l'application d'une deuxième puissance de chauffe *P*₂ sensiblement nulle autorisant une évolution libre de la température à l'intérieur du local.

Comme décrit dans WO 2012/028829 A1, la détermination du coefficient de déperdition thermique *K* d'un local est basée, dans le cadre de l'invention, sur la modélisation du local selon un modèle R-C avec une résistance et une capacité. Le local est considéré comme une boîte isotherme caractérisée, d'une part, par son coefficient de déperdition thermique *K,* qui est l'inverse d'une résistance, et, d'autre part, par son inertie ou sa capacité thermique effective *C.* La capacité thermique effective *C* d'un local, pour une sollicitation thermique du local à puissance constante, correspond à la capacité thermique des matériaux situés dans l'enveloppe isolante du local et est définie comme l'énergie nécessaire pour augmenter la température ambiante du local de 1 K à température extérieure constante pendant la durée de la sollicitation.

Pour chaque période de temps (*Dₖ*)_{*k* = 1 ou 2}, la température intérieure du local *Tᵢₖ* est supposée homogène. L'évolution de la différence de température entre l'intérieur et l'extérieur Δ*Tₖ* = *Tₖ - Tₑₖ* suit un comportement exponentiel, selon l'équation : $C d Δ {T}_{k} = \left({P}_{k} - K Δ {T}_{k}\right) dt$ avec
- *K*: le coefficient de déperdition thermique du local,
- *C*: la capacité thermique effective du local,
- *Pₖ*: la puissance de chauffe du local,
- Δ*Tₖ*: la différence de température entre l'intérieur et l'extérieur.

D'après l'équation (1), la pente *aₖ* de la tangente à la courbe représentative de l'évolution de la grandeur Δ*Tₖ* = *Tₖ - Tₑₖ* en fonction du temps est donc donnée par : ${a}_{k} = \frac{d Δ {T}_{k}}{dt} = \frac{{P}_{k} - K Δ {T}_{k}}{C} .$

En pratique, dans le cadre du procédé de l'invention, on recherche dans chaque période de temps *Dₖ* un intervalle de temps Δ*tₖ* pour lequel l'évolution *Tᵢₖ*(*t*) est sensiblement linéaire. Sur cet intervalle de temps Δ*tₖ*, on peut considérer que la température de l'air extérieur *Tₑₖ* est sensiblement constante et égale à la température moyenne *Tₑₘ* de l'air extérieur sur l'ensemble des périodes de temps *D*₁ et *D*₂*.* En outre, comme on sélectionne un intervalle de temps Δ*tₖ* dans la période de chauffe *Dₖ*, on peut considérer une valeur moyenne *Tᵢₖₘ* de *Tᵢₖ*(*t*) sur l'intervalle de temps Δ*tₖ* dans l'expression de la pente *aₖ.* Dès lors, la pente *aₖ* est donnée par : ${a}_{k} = \frac{{P}_{k} - K Δ {T}_{km}}{C} , avec Δ {T}_{km} = {T}_{ikm} - {T}_{em} .$

Ainsi, il est possible d'accéder à une valeur *K_{calc}* du coefficient de déperdition thermique du local en appliquant, sur deux périodes de temps successives *D*₁ et *D*₂, deux puissances de chauffe *P*₁ et *P*₂ de valeurs différentes, et en mesurant l'évolution d'au moins une température à l'intérieur du local *T*_{*i*1}(*t*) ou *T*_{*i*2}(*t*) sur chacune de ces deux périodes de temps. Pour chaque période de temps *D*₁ ou *D*₂, on sélectionne un intervalle de temps Δ*t*₁ ou Δ*t*₂ pour lequel l'évolution *T*_{*i*1}(*t*) ou *T*_{*i*2}(*t*) est sensiblement linéaire, et on détermine, sur cet intervalle de temps Δ*t*₁ ou Δ*t*₂, la pente *a*₁ ou *a*₂ de la tangente à la courbe (*Tᵢₖ*(*t*))_{*k*=1 ou 2}*.* La valeur *K_{calc}* du coefficient de déperdition thermique du local est alors donnée par : ${K}_{calc} = \frac{{a}_{1} {P}_{2} - {a}_{2} {P}_{1}}{{a}_{1} Δ {T}_{2 m} - {a}_{2} Δ {T}_{1 m}}$

Il a été constaté expérimentalement que l'erreur sur la valeur *K_{calc}* du coefficient de déperdition thermique déterminée par un test en deux phases comme décrit ci-dessus est susceptible d'augmenter lorsqu'on réduit le temps de mesure. Dans le but de réduire le temps de mesure tout en limitant l'erreur sur la valeur *K_{calc}*, une étude a été menée pour évaluer l'influence des conditions dans lesquelles se déroule le test sur la précision de la valeur *K_{calc}* obtenue.

A cet effet, les inventeurs ont mis en place un modèle diffusif simplifié, dans lequel on considère une couche de matériau homogène d'épaisseur *e,* comprenant une face externe et une face interne. Cette couche est soumise à un test en deux phases, comprenant une première phase, dans laquelle on soumet la face interne de la couche à une première puissance de chauffe *P*_{*h*1} constante pendant un temps de chauffe allant de 0 à *tₕ,* et une deuxième phase, dans laquelle on soumet la face interne de la couche à une deuxième puissance de chauffe *P*_{*h*2} constante différente de *P*_{*h*1} pendant un temps de chauffe allant de *tₕ* à 2*tₕ*. La face externe de la couche est maintenue à température constante pendant la durée du test. Si la couche est dans un état initial statique avec une différence de température Δ*T*(0) = *T*ᵢₙₜ(*t*= 0) - *Tₑₓₜ*(*t* = 0), l'évolution de la température de la face interne est donnée par : ${T}_{int} \left(t\right) = { \begin{matrix}∀ 0 \leq t \leq {t}_{h} , {P}_{1} R - \left({P}_{1} - Δ T \left(0\right) K\right) {\sum }_{j \geq 0} {R}_{j} {e}^{- t / {τ}_{j}} \\ ∀ {t}_{h} < t \leq 2 {t}_{h} , {P}_{2} R - \left({P}_{1} - Δ T \left(0\right) K\right) {\sum }_{j \geq 0} {R}_{j} {e}^{- t / {τ}_{j}} - \left({P}_{2} - {P}_{1}\right) {\sum }_{j \geq 0} {R}_{j} {e}^{- \left(t - {t}_{h}\right) / {τ}_{j}}\end{matrix}$ avec *τⱼ* les constantes de temps intrinsèques de la couche telles que : $∀ j \geq 0, {τ}_{j} = RC \frac{4}{{π}^{2} {\left(2 j + 1\right)}^{2}} ,$ *Rⱼ* les poids associés, homogènes à une résistance thermique, tels que : $∀ j \geq 0, {R}_{j} = R \frac{8}{{π}^{2} {\left(2 j + 1\right)}^{2}} ,$ où $R = \frac{e}{Sλ}$ et *C* = *e Sρ* Cp, avec *A* la conductivité thermique de la couche, *ρ* la densité de la couche, *S* la surface de la couche et Cp la capacité calorifique de l'air.

Afin de comprendre de quelle manière les différentes constantes de temps affectent la valeur *K_{calc}* du coefficient de déperdition thermique déterminée par un test en deux phases tel que décrit précédemment, les inventeurs ont injecté l'équation (3) dans l'équation (2), ce qui donne : ${K}_{calc} = K \frac{1}{1 - β \frac{{f}_{B} \left({t}_{h}\right)}{\frac{{P}_{h 1} \left({P}_{h 1} - Δ T \left(0\right) K\right)}{{P}_{h 1}^{2} - {P}_{h 2} Δ T \left(0\right) K} {g}_{B} \left({t}_{h}\right)}}$ où *β* est un paramètre adimensionnel tel que $β = \frac{{\left({P}_{h 1} - Δ T \left(0\right) K\right)}^{2}}{{P}_{h 1}^{2} - {P}_{h 2} Δ T \left(0\right) K} ;$ *f_{B}*(*tₕ*) et *g_{B}*(*tₕ*) sont des fonctions dépendant uniquement du local et du temps de chauffe *tₕ,* qui sont des fonctions monotones, décroissantes lorsque le temps de chauffe augmente, et telles que 0<*f_{B}*(*tₕ*) et 0*<g_{B}*(*tₕ*) ≤ 1.

Les inventeurs ont ainsi constaté, à partir de l'expression (4), que la valeur *K_{calc}* du coefficient de déperdition thermique déterminée par un test en deux phases tel que décrit précédemment est égale au coefficient de déperdition thermique *K* de la couche multiplié par un facteur correctif dépendant du paramètre *β*. En particulier, l'erreur sur la valeur de *K_{calc}* est minimisée lorsque le paramètre *β* tend vers 0.

Pour des raisons pratiques, les inventeurs se sont intéressés aux configurations où l'une des puissances de chauffe *P*_{*h*1} et *P*_{*h*2} est nulle.

Dans la première configuration où la première puissance de chauffe *P*_{*h*1} est nulle, le paramètre adimensionnel qui intervient dans l'expression de *K_{calc}* est : $β = - \frac{Δ T \left(0\right) K}{{P}_{h 2}} .$

Dans cette première configuration, le test en deux phases conduit à une valeur *K_{calc}* surévaluée si *β* est positif et sous-évaluée si *β* est négatif. De plus, le paramètre *β* diminue en valeur absolue, et donc la précision sur *K_{calc}* augmente, lorsque la différence de température initiale Δ*T*(0) diminue ou lorsque la deuxième puissance de chauffe *P*_{*h*2} augmente.

En pratique, ces conditions expérimentales ne sont pas faciles à mettre en oeuvre pour un bâtiment réel, car on subit les conditions expérimentales qui ont précédé le test et qui peuvent perturber les mesures. C'est pourquoi on se place plutôt dans la deuxième configuration où on force la sollicitation avec une première puissance de chauffe *P*_{*h*1} non nulle, tandis que la deuxième puissance de chauffe *P*_{*h*2} est nulle.

Dans cette deuxième configuration où la deuxième puissance de chauffe *P*_{*h*2} est nulle, le paramètre adimensionnel qui intervient dans l'expression de *K_{calc}* est : $α = \sqrt{β} = 1 - \frac{Δ T \left(0\right) K}{{P}_{h 1}} .$

La valeur *K_{calc}* du coefficient de déperdition thermique déterminée dans la deuxième configuration, par un test en deux phases avec une première puissance de chauffe *P*_{*h*1} positive constante et une deuxième puissance de chauffe *P*_{*h*2} nulle, est alors donnée par : ${K}_{calc} = K \frac{1}{1 - {α}^{2} \frac{{f}_{B} \left({t}_{h}\right)}{1 - α {g}_{B} \left({t}_{h}\right)}}$

Dans cette deuxième configuration, comme le facteur correctif $\frac{1}{1 - {α}^{2} \frac{{f}_{B} \left({t}_{h}\right)}{1 - α {g}_{B} \left({t}_{h}\right)}}$ est supérieur ou égal à 1, le test en deux phases conduit toujours à une valeur *K_{calc}* surévaluée par rapport au coefficient de déperdition thermique K de la couche. L'expression (5) permet également de voir que le facteur correctif diminue, et donc la précision sur *K_{calc}* augmente, lorsque le temps de chauffe *tₕ* augmente et lorsque le paramètre *α* diminue. Pour améliorer la précision sur la valeur *K_{calc}*, il convient donc soit d'augmenter le temps de chauffe *tₕ*, soit de diminuer le paramètre *α*.

Les inventeurs ont établi expérimentalement, en procédant à des séries de tests en deux phases avec une première puissance de chauffe *P*₁ positive constante et une deuxième puissance de chauffe *P*₂ sensiblement nulle sur différents types de locaux et en faisant varier la valeur du paramètre a d'un test à l'autre, qu'il est possible, pour tous les types de locaux, d'obtenir une bonne précision sur la valeur *K_{calc}*, c'est-à-dire une précision telle que la valeur *K_{calc}* se trouve dans une fourchette ± 20% autour de *K,* tout en ayant un temps de chauffe inférieur ou égal à 4 heures, à condition que le paramètre a reste inférieur ou égal à 0,8. Le temps de chauffe ou l'erreur peuvent être encore réduits en diminuant le paramètre a .

Partant de ce constat expérimental, l'invention propose de déterminer le coefficient de déperdition thermique d'un local sur un temps réduit, tout en préservant une bonne précision sur le résultat, en mettant en place les mesures suivantes :
- La première puissance de chauffe *P*₁ est choisie non nulle et telle que le paramètre $α = 1 - \frac{Δ {T}_{1} \left(0\right) {K}_{ref}}{{P}_{1}}$ est inférieur ou égal à 0,8 où Δ*T*₁(0) = *T*_{*i*1}(*t*= 0) - *Tₑₘ*, avec *t* = 0 le point de départ de la première période de temps *D*₁, *Tₑₘ* est la température moyenne de l'air extérieur sur l'ensemble des périodes de temps *D*₁ et *D*₂, et *K_{ref}* est une valeur de référence du coefficient de déperdition thermique *K* du local. On considère ici que la température de l'air extérieur est stable sur les périodes de temps *D*₁ et *D*₂, de sorte que la température initiale de l'air extérieur est sensiblement égale à la température moyenne *Tₑₘ* de l'air extérieur sur l'ensemble des périodes de temps *D*₁ et *D*₂*.* Il est à noter que la première puissance de chauffe *P*₁ peut être une puissance positive, lorsque la différence de température initiale Δ*T*₁(0) du local est positive, ou une puissance négative, lorsque la différence de température initiale Δ*T*₁(0) du local est négative.
- L'intervalle de temps Δ*t*₂, utilisé pour le traitement des données obtenues sur la deuxième période de temps *D*₂, est choisi avec un point de fin tel que la durée entre le point de départ de la période *D*₂ et le point de fin de l'intervalle Δ*t*₂, est égale à la durée de la première période de temps *D*₁*.* Il a en effet été constaté expérimentalement qu'une telle symétrie de traitement des données améliore la précision de la valeur *K_{calc}*, Cela correspond aux conditions du modèle diffusif simplifié décrit précédemment, où les deux phases de chauffe ont la même durée.

De manière avantageuse, en appliquant les deux critères listés ci-dessus, la première période de temps *D*₁ sur laquelle est appliquée la première puissance de chauffe *P*₁ peut avoir une durée inférieure ou égale à 4 heures, sans que cela ne pénalise la précision sur la valeur *K_{calc}*, qui reste de l'ordre de ± 20% autour de *K*.

Selon une caractéristique avantageuse, la première puissance de chauffe *P*₁ du local comprend une puissance de chauffe *P*ᵢₘₚ₁ imposée au moyen d'une source de puissance contrôlée. Si aucune source de puissance autre que celle utilisée pour appliquer la puissance de chauffe imposée *P*ᵢₘₚ₁ n'est active dans le local au cours de la première période de temps D₁, la première puissance de chauffe *P*₁ du local est égale à la puissance de chauffe imposée *P*ᵢₘₚ₁. Si en revanche il existe, au cours de la période *D*₁, une puissance supplémentaire *P*ₛᵤₚ₁ dans le local en plus de la puissance *P*ᵢₘₚ₁, la première puissance de chauffe *P*₁ est égale à *P*ᵢₘₚ₁ + *P*ₛᵤₚ₁. En particulier, dans le cas où le rayonnement solaire sur la première période de temps *D*₁ est important, la contribution du rayonnement solaire au chauffage du local fait partie de la puissance supplémentaire *P*ₛᵤₚ₁.

En pratique, les conditions de mise en oeuvre du procédé sont adaptées pour limiter les apports de puissance supplémentaires *P*ₛᵤₚ₁ autres que la puissance de chauffe imposée *P*ᵢₘₚ₁. De préférence, le procédé est mis en oeuvre alors que le local est inoccupé.

De manière avantageuse, le procédé est mis en oeuvre sur des périodes de temps *D*₁ et *D*₂ pour lesquelles le rayonnement solaire est faible, de préférence nul. De manière préférée, le procédé est mis en oeuvre sur des périodes de temps *D*₁ et *D*₂ choisies pendant la nuit, ou éventuellement en journée le matin ou le soir. Il est ainsi possible de réduire la contribution du rayonnement solaire et de limiter les fluctuations de la température de l'air extérieur.

Les périodes de temps *D*₁ et *D*₂ peuvent être soit disjointes, soit immédiatement successives. Dans ce dernier cas, on peut considérer que le procédé est réalisé dans sa globalité sur une période de temps continue, formée par la succession des périodes de temps *D*₁ et *D*₂. De manière préférée, en vue de limiter le temps de mise en oeuvre du procédé tout en réduisant la contribution du rayonnement solaire, le procédé est réalisé dans sa globalité en continu sur une seule période nocturne.

De préférence, sur chacune des périodes de temps *D*₁ et *D*₂, tout système de ventilation fixe équipant le local est désactivé et toutes les prises de ventilation sont fermées ou bouchées, de manière à limiter les échanges d'air avec l'extérieur.

En variante, les systèmes de ventilation fixes du local peuvent fonctionner au cours du procédé sur chacune des périodes de temps *D*₁ et *D*₂*.* Cela introduit toutefois un terme supplémentaire de renouvellement d'air dans l'expression du coefficient de déperdition thermique K : $K = {H}_{T} + m {′}_{1} . Cp + m {′}_{2} . Cp ,$ où m'₁ le débit de renouvellement de l'air par infiltration et m'₂ le débit de renouvellement de l'air dû aux systèmes de ventilation fixes sont corrélés, la valeur de l'un dépendant de la valeur de l'autre.

L'analyse des résultats expérimentaux permet de définir des critères préférentiels pour la première puissance de chauffe *P*₁ à appliquer dans le local.

En particulier, selon un aspect de l'invention, la première puissance de chauffe *P*₁ est de préférence telle que le paramètre $α = 1 - \frac{Δ {T}_{1} \left(0\right) {K}_{ref}}{{P}_{1}}$ est inférieur ou égal à 0,75, encore de préférence inférieur ou égal à 0,7.

De préférence, la première puissance de chauffe *P*₁ est telle que le paramètre $α = 1 - \frac{Δ {T}_{1} \left(0\right) {K}_{ref}}{{P}_{1}}$ est supérieur ou égal à 0,25, encore de préférence supérieur ou égal à 0,3. En effet, pour des bâtiments bien isolés, lorsque le paramètre *α* est inférieur à 0,25 ou 0,3, la sensibilité des capteurs de mesure classiques ne permet pas d'obtenir des données satisfaisantes concernant l'évolution de la température à l'intérieur du local *T*_{*i*1} sur la première période de temps *D*₁, d'où une augmentation de l'erreur sur la valeur *K_{calc}.*

Selon une caractéristique préférée, la première puissance de chauffe *P*₁ est telle que le paramètre $α = 1 - \frac{Δ {T}_{1} \left(0\right) {K}_{ref}}{{P}_{1}}$ est sensiblement égal à 0,5. L'analyse des résultats expérimentaux montre en effet que cette valeur du paramètre a permet, pour tous les types de locaux, d'obtenir une bonne précision sur la valeur *K_{calc}*, dans une fourchette ± 20% autour de *K* . Les inventeurs ont également constaté expérimentalement que la nécessité de diminuer le paramètre *α* pour obtenir une bonne précision sur la valeur *K_{calc}* est d'autant plus prononcée que l'inertie *C* du local est importante et que le temps de chauffe, c'est-à-dire la durée de la première période de temps *D*₁, diminue. En pratique, plus le paramètre *α* est proche de 0,5, plus la précision sur la valeur *K_{calc}* est bonne et moins elle dépend de l'inertie du local et du temps de chauffe.

Lorsque le paramètre a est sensiblement égal à 0,5, la précision sur la valeur *K_{calc}* est d'autant meilleure que le temps de chauffe est long. En particulier, en choisissant la première puissance de chauffe *P*₁ telle que le coefficient $α = 1 - \frac{Δ {T}_{1} \left(0\right) {K}_{ref}}{{P}_{1}}$ est sensiblement égal à 0,5 et un temps de chauffe de l'ordre de 4 heures, il est possible d'atteindre une précision de l'ordre de ± 15% sur la valeur *K_{calc}*.

La nécessité de diminuer le paramètre a pour obtenir une bonne précision sur la valeur *K_{calc}* avec un temps de chauffe court est également plus prononcée pour des locaux présentant une isolation par l'extérieur que pour des locaux présentant une isolation par l'intérieur.

De manière avantageuse, dans le cadre du procédé de l'invention, suite à la détermination de la valeur *K_{calc}* du coefficient de déperdition thermique *K* du local à partir des pentes *a*₁ et *a*₂, on calcule la valeur du paramètre ${α}_{calc} = 1 - \frac{Δ {T}_{1} \left(0\right) {K}_{calc}}{{P}_{1}}$ et on vérifie que α*_{calc}* est bien dans la gamme de valeurs prédéfinie pour le paramètre *α*.

On note que la détermination de la valeur de la première puissance de chauffe *P*₁ à appliquer sur la première période de temps *D*₁ pour satisfaire aux critères sur le paramètre *α* impose de connaître une valeur de référence *K_{ref}* du coefficient de déperdition thermique *K* du local.

Une première méthode pour accéder à une valeur de référence *K_{ref}* du coefficient de déperdition thermique *K* du local est l'utilisation d'une grandeur issue d'une analyse thermique du local, notamment l'utilisation du coefficient de transmission ou de transfert thermique de l'enveloppe du local.

Selon l'invention, on détermine le coefficient de transfert thermique *H* de l'enveloppe du local en utilisant la norme ISO 13789:2007 « Performance thermique des bâtiments - Coefficients de transfert thermique par transmission et par renouvellement d'air - Méthode de calcul », puis on déduit la valeur de référence *K_{ref}* du coefficient de déperdition thermique par la relation : ${K}_{ref} = {H}_{T} + {H}_{V}$ où *H_{T}* est le coefficient de transfert thermique par transmission et *H_{V}* est le coefficient de transfert thermique par ventilation. De préférence, le coefficient de transfert thermique de l'enveloppe du local est déterminé, selon la norme ISO 13789:2007 en l'absence de ventilation dans le local. En variante, la ventilation peut être active dans le local, le débit de ventilation devant alors être mesuré ou estimé.

L'utilisation de la norme ISO 13789:2007 est une méthode préférée pour accéder à une valeur de référence *K_{ref}* du coefficient de déperdition thermique *K* du local. Toutefois, d'autres méthodes sont également envisageables, notamment lorsqu'on ne dispose pas de toutes les informations sur le local nécessaires pour appliquer la norme ISO 13789:2007.

Une deuxième méthode pour accéder à une valeur de référence *K_{ref}* du coefficient de déperdition thermique *K* du local lorsqu'on ne dispose pas de toutes les informations sur le local nécessaires pour appliquer la norme ISO 13789:2007 est de soumettre le local à un test quasi-statique, tel qu'un test de "coheating".

Le "coheating" est une méthode quasi-statique dont l'objectif est de mesurer la perte thermique totale d'un local non occupé. Un test de "coheating" met en jeu un chauffage du local pendant plusieurs jours, généralement pendant une à trois semaines, à une température constante et homogène, grâce à des radiateurs électriques couplés à des ventilateurs et reliés à un système de régulation. La température de consigne doit être assez élevée, de l'ordre de 25°C, de manière à avoir une différence de température entre l'intérieur du local et l'extérieur d'au moins 10°C. Lorsque la saturation est atteinte, c'est-à-dire lorsqu'un état quasi-statique est atteint, on mesure la puissance P nécessaire pour maintenir le local à une température de 25°C, la température intérieure Tᵢₙₜ et la température extérieure Tₑₓₜ. La température intérieure Tᵢₙₜ peut notamment être mesurée à l'aide de thermocouples ou thermistances, tandis que la température extérieure Tₑₓₜ peut être mesurée grâce à une station météorologique. Le traitement des données permet alors d'obtenir une valeur *K_{ref}* du coefficient de déperdition thermique.

Plus précisément, la procédure est la suivante :
Tout d'abord, un premier test de pressurisation a lieu, qui permet de mesurer les pertes dues à la ventilation et aux infiltrations.

Ensuite, les ouvertures telles que les cheminées ou les bouches d'aération sont fermées, de sorte que les pertes liées à la ventilation ne sont plus accessibles à la mesure.

Le local est alors chauffé électriquement et de façon homogène, jusqu'à ce qu'une température de consigne élevée, de l'ordre de 25°C, soit atteinte.

On mesure alors la puissance P, la température intérieure Tᵢₙₜ et la température extérieure Tₑₓₜ. Le traitement de ces mesures donne accès aux pertes par transmission et par infiltration.

Enfin, on réalise un deuxième test de pressurisation, de façon à connaître les pertes thermiques dues aux infiltrations uniquement, les ouvertures du bâtiment étant maintenues fermées.

Pour le traitement des mesures, on réalise chaque jour, sur vingt-quatre heures, la moyenne de la puissance nécessaire pour maintenir le bâtiment à la température de consigne et la moyenne de la différence de température entre l'intérieur et l'extérieur. Ces données moyennées sont alors reportées sur un graphique donnant la puissance en fonction de la différence de température. Une correction, due au rayonnement solaire qui participe aussi au chauffage du local, est à apporter. La pente de la droite qui passe par l'origine est donnée par régression linéaire, elle correspond au coefficient de déperdition thermique *K_{ref}.*

Cette méthode de "coheating" est relativement simple à mettre en oeuvre et fournit directement une valeur de référence *K_{ref}* du coefficient de déperdition thermique *K* du local. Selon une variante avantageuse, pour des bâtiments légers, on peut réaliser des tests de "coheating" la nuit, la correction due aux apports solaires n'étant alors pas à faire.

Une troisième méthode pour accéder à une valeur de référence *K_{ref}* du coefficient de déperdition thermique *K* du local lorsqu'on ne dispose pas de toutes les informations sur le local nécessaires pour appliquer la norme ISO 13789:2007 est l'utilisation d'une grandeur issue d'une étude de la consommation énergétique du local. En particulier, la valeur de référence *K_{ref}* peut être déterminée comme étant le rapport de l'énergie consommée par le local sur une période de temps donnée sur le produit de la durée de la période de temps donnée et de la différence de température moyenne entre l'intérieur et l'extérieur du local sur la période de temps donnée.

Dans un mode de réalisation du procédé selon l'invention, on détermine, sur chaque intervalle de temps Δ*t*₁ ou Δ*t*₂, la pente *a*₁ ou *a*₂ de la tangente à la courbe (*Tᵢₖ*(*t*))_{*k* = 1 ou 2} en calculant la moyenne des pentes en chaque point de l'intervalle de temps Δ*t*₁ ou Δ*t*₂, la moyenne étant pondérée sur l'incertitude associée à chaque point.

Dans un autre mode de réalisation du procédé selon l'invention, on détermine, sur chaque intervalle de temps Δ*t*₁ ou Δ*t*₂, la pente *a*₁ ou *a*₂ de la tangente à la courbe (*Tᵢₖ*(*t*)*)*_{*k* = 1 ou 2} en identifiant au moins une fonction mathématique usuelle qui régularise la courbe (*Tᵢₖ*(*t*))_{*k* = 1 ou 2} sur l'intervalle de temps Δ*tᵢ* et en calculant la dérivée de cette fonction au point de fin de l'intervalle de temps Δ*tᵢ*. La ou chaque fonction mathématique qui régularise la courbe (*Tᵢₖ*(*t*))_{*k* = 1 ou 2} sur l'intervalle de temps Δ*tᵢ* peut être, notamment, une fonction exponentielle ou polynomiale.

Selon un aspect avantageux mais non obligatoire, pour chacune des périodes de temps *D*₁ et *D*₂, la campagne de mesures de la température intérieure du local *Tᵢₖ* est réalisée sur une période de temps suffisante pour obtenir une variation de la température intérieure *Tᵢₖ* d'au moins 1°C, de préférence comprise entre 1°C et 10°C.

Selon une caractéristique avantageuse, la source de puissance contrôlée pour le chauffage du local peut être un équipement fixe du local, c'est-à-dire un moyen de chauffage installé dans le local indépendamment de la mise en oeuvre du procédé, sous réserve que ce moyen de chauffage soit peu inerte et ajustable de manière à assurer un chauffage rapide du local. Il peut notamment s'agir d'une pompe à chaleur dont le coefficient de performance (COP) est connu.

En variante, la source de puissance contrôlée pour le chauffage du local peut être une source rapportée dans le local spécifiquement pour la mise en oeuvre du procédé.

Les éléments de chauffage du local peuvent être de type convectif, conductif ou radiatif, ou combiner plusieurs de ces technologies. De préférence, les éléments de chauffage sont des appareils électriques, ce qui permet de déterminer la puissance de chauffe de manière directe et précise. Des exemples d'appareils de chauffage électriques comprennent notamment des appareils de type convectif mettant en jeu le soufflage d'air chauffé au moyen de résistances électriques ; des tapis ou des films chauffants ; des parasols radiants. En variante, les éléments de chauffage peuvent être des appareils fonctionnant au gaz ou au fuel, pour autant que les rendements des brûleurs et les débits de combustible puissent être estimés de manière suffisamment précise pour accéder à la puissance de chauffe.

Dans un mode de réalisation avantageux, les éléments de chauffage du local sont des tapis chauffants électriques, que l'on répartit dans le local en les positionnant verticalement et enroulés sur eux-mêmes, de sorte que toute la puissance thermique est dissipée dans l'air. Cet agencement permet un chauffage rapide et homogène du local, assurant que la température ambiante est suffisamment proche de la température des parois à l'intérieur du local.

Selon une caractéristique avantageuse, chaque campagne de mesures de la température à l'intérieur du local comprend des mesures de la température ambiante à l'intérieur du local, des mesures de la température de parois du local et/ou des mesures de la température moyenne radiante à l'intérieur du local. En pratique, toute méthode de mesures connue peut être utilisée pour accéder à ces températures, en particulier les méthodes de mesures décrites dans la norme NF EN ISO 7726. A titre d'exemple, les mesures de la température ambiante à l'intérieur du local et de la température des parois du local peuvent être réalisées à l'aide de thermocouples de type K ou de sondes Pt100. Pour les mesures de la température moyenne radiante à l'intérieur du local, un thermomètre à globe noir peut être utilisé.

De manière avantageuse, lorsque le chauffage du local assure que la température ambiante est suffisamment proche de la température des parois à l'intérieur du local, on mesure la température ambiante à l'intérieur du local.

Si le chauffage du local est bien homogène, de sorte que la température intérieure est la même dans tout le local, ou dans toutes les pièces ou zones du local si celui-ci comporte des cloisons internes, alors les mesures de la température à l'intérieur du local peuvent se limiter à des mesures à l'intérieur d'une seule pièce ou zone du local.

Si le procédé de l'invention est mis en oeuvre dans un local pour lequel le chauffage est moins homogène, il peut être envisagé de mesurer la température dans plusieurs pièces ou zones du local et de considérer que la température à l'intérieur du local à chaque temps t est la moyenne des mesures de température obtenues au temps t dans les différentes pièces ou zones du local, à condition que celles-ci ne soient pas trop différentes, ce qui indiquerait un manque de ventilation du local. Il est également possible de prévoir plusieurs mesures de températures différentes dans chaque pièce ou zone du local. Ainsi, on peut prévoir de réaliser dans chaque pièce ou zone à la fois une mesure de la température ambiante et/ou une mesure de la température d'une paroi de l'enveloppe du local et/ou une mesure de la température moyenne radiante.

Une autre possibilité en cas de chauffage moins homogène est de mesurer la puissance et la température dans chaque pièce ou zone du local, de manière à déterminer le coefficient de déperdition thermique de chaque pièce ou zone du local, puis de sommer les valeurs obtenues pour les différentes pièces ou zones afin d'obtenir le coefficient de déperdition thermique total du local.

Dans ce texte, on définit une pièce d'un local comme étant un espace du local encadré par des parois. On définit par ailleurs une zone d'un local comme étant un espace formé par plusieurs pièces du local qui peuvent être traitées de manière unitaire, c'est-à-dire que, dans le cadre du procédé de l'invention, un seul capteur de mesure de puissance et un seul capteur de mesure de température peuvent être prévus pour chaque zone du local.

Selon une caractéristique, la détermination de la température de l'air extérieur *Tₑₖ* s'opère, dans le cadre du procédé de l'invention, par le biais d'une campagne de mesures à intervalles de temps rapprochés. Les mesures de la température de l'air extérieur *Tₑₖ* peuvent être simultanées aux mesures de la température intérieure du local *Tᵢₖ*, c'est-à-dire effectuées aux mêmes temps rapprochés.

En variante, la détermination de la température de l'air extérieur *Tₑₖ* à intervalles de temps rapprochés peut être obtenue par interpolation de données météorologiques du lieu du local.

De préférence, le procédé selon l'invention est mis en oeuvre sur une période de temps pour laquelle la température de l'air extérieur *Tₑₖ* est stable.

Le coefficient de déperdition thermique K déterminé conformément à l'invention intègre les contributions des pertes thermiques par transmission et des infiltrations d'air, c'est-à-dire : $K = {H}_{T} + m ′ . Cp = {UA}_{T} + m ′ . Cp .$

Si l'on souhaite accéder au coefficient de transmission thermique U du local, il est possible de découpler la contribution des pertes thermiques par transmission, d'une part, et celle des infiltrations d'air, d'autre part, en évaluant le débit de renouvellement de l'air m' dans le local.

Lorsqu'aucun système de ventilation fixe du local n'est actif au cours du procédé de détermination du coefficient *K,* le débit m' est égal au débit de renouvellement de l'air par infiltration. Ce débit m' peut être déterminé par toute méthode appropriée, notamment par une méthode de détection par gaz traceurs ou par un test d'infiltrométrie à porte soufflante, comme décrit dans WO 2012/028829 A1.

Une autre possibilité pour découpler la contribution des pertes thermiques par transmission et la contribution des infiltrations d'air est de rapporter dans le local un système de ventilation dont le débit est imposé par l'utilisateur au cours de la mise en oeuvre du procédé conforme à l'invention. Ce système de ventilation rapporté peut être, notamment, un système de pressurisation ou de dépressurisation du local de type porte soufflante.

Un autre objet de l'invention est un support d'enregistrement d'informations, comportant des instructions pour la mise en oeuvre de tout ou partie des étapes de calcul d'un procédé de détermination du coefficient de déperdition thermique *K* d'un local tel que décrit ci-dessus lorsque ces instructions sont exécutées par une unité de calcul électronique, les étapes de calcul comprenant notamment :
- le calcul de la première puissance de chauffe *P*₁ à appliquer sur la première période de temps *D*₁, à partir des valeurs de *α,* Δ*T*₁(0) et *K_{ref},*
- le calcul, sur chaque intervalle de temps Δ*t*₁ ou Δ*t*₂, de la pente *a*₁ ou *a*₂ à partir des mesures de température à l'intérieur du local *T*_{*i*1} ou *T*_{*i*2},
- le calcul de la valeur *K_{calc}* du coefficient de déperdition thermique *K* du local à partir des pentes *a*₁ et *a*₂ et des puissances *P*₁ et *P*₂.

Selon une caractéristique avantageuse, le support d'enregistrement d'informations comporte en outre des instructions pour la commande, en fonction de données d'entrée, d'une source de puissance contrôlée utilisée pour appliquer la première puissance de chauffe *P*₁ dans le local.

L'invention a également pour objet un dispositif pour la mise en oeuvre d'un procédé tel que décrit ci-dessus, qui comprend :
- au moins un élément de chauffage comportant une source de puissance contrôlée,
- au moins un capteur de température qui mesure une température à l'intérieur du local *Tᵢₖ*,
- au moins un capteur de puissance qui mesure la puissance de chauffe *Pₖ* délivrée dans le local,
- au moins un module d'acquisition pour acquérir les mesures de température à l'intérieur du local *Tᵢₖ*, les mesures de puissance de chauffe *Pₖ* délivrée dans le local, la température de l'air extérieur *Tₑₖ*,
- une unité de calcul électronique, et
- un support d'enregistrement d'informations comportant des instructions, destinées à être exécutées par l'unité de calcul électronique, pour la mise en oeuvre de tout ou partie des étapes de calcul du procédé que sont : le calcul de la première puissance de chauffe *P*₁ à appliquer sur la première période de temps *D*₁, à partir des valeurs de *α,* Δ*T*₁(0) et *K_{ref}* ; le calcul, sur chaque intervalle de temps Δ*t*₁ ou Δ*t*₂, de la pente *a*₁ ou *a*₂ à partir des mesures de température à l'intérieur du local *T*_{*i*1} ou *T*_{*i*2} ; le calcul de la valeur *K_{calc}* du coefficient de déperdition thermique *K* du local à partir des pentes *a*₁ et *a*₂ et des puissances *P*₁ et *P*₂*.*

Selon une caractéristique avantageuse, chaque élément de chauffage du dispositif chauffe l'air du local, ce qui permet un chauffage rapide du local. Tel est le cas notamment avec des tapis chauffants électriques comme décrits précédemment, qui sont disposés verticalement dans le local et enroulés sur eux-mêmes, de sorte que toute la puissance thermique est dissipée dans l'air.

Selon une autre caractéristique avantageuse, chaque capteur de température mesure la température de l'air à l'intérieur du local. Dans ce cas, pour chaque pièce ou zone du local, une seule mesure dans le volume d'air sensiblement au centre de la pièce ou zone peut suffire à obtenir une valeur représentative de la température moyenne dans la pièce ou zone, à condition que le chauffage soit suffisamment homogène.

La mesure de la température de l'air à l'intérieur du local est plus simple que la mesure de la température de parois. En effet, si l'on choisit de réaliser des mesures de température de paroi, il est nécessaire, pour obtenir une bonne estimation de la température moyenne dans une pièce ou zone, de réaliser des mesures de températures sur plusieurs parois de la pièce ou zone, puis de déterminer une moyenne de ces températures de parois, et ce quelle que soit l'homogénéité du chauffage. La mesure de température dans l'air permet donc de réduire le nombre de mesures à effectuer dans le cadre du procédé selon l'invention, pour autant qu'elle est réalisée dans une pièce ou zone chauffée de manière globalement homogène. Par la combinaison d'un chauffage homogène du local et d'une mesure de la température dans l'air à l'intérieur du local, la mise en oeuvre du procédé selon l'invention est simplifiée et sa durée est limitée.

Le ou chaque capteur de puissance peut être un capteur de tension (voltmètre) et/ou un capteur de courant (ampèremètre). De préférence, le ou chaque capteur de puissance est un wattmètre, muni à la fois d'un capteur de tension et d'un capteur de courant. Cela permet une mesure précise de la puissance dans le local, en s'affranchissant d'éventuelles fluctuations de la tension de secteur ou de la détermination de la résistance du ou de chaque élément de chauffage.

Dans un mode de réalisation, le dispositif comprend au moins un boîtier qui est situé dans une pièce ou zone du local et qui comporte :
- un module de gestion de puissance, auquel est connectée la source de puissance du ou de chaque élément de chauffage situé dans ladite pièce ou zone du local,
- un module de mesure de température, auquel est connecté le ou chaque capteur de température situé dans ladite pièce ou zone du local,
- un capteur de puissance, qui mesure la puissance de chauffe délivrée dans ladite pièce ou zone du local,
- des moyens de liaison entre le boîtier et l'unité de calcul électronique, de telle sorte que l'unité de calcul électronique est apte à recevoir les mesures de température et de puissance et à commander le module de gestion de puissance.

Le module de gestion de puissance de chaque boîtier est destiné à réguler la puissance de chauffe appliquée dans la pièce ou zone du local. Il peut s'agir d'un module des gestion de puissance par commutation, qui fait passer le ou les éléments de chauffage entre leur état allumé et leur état éteint, ou d'un module de gestion de puissance apte à faire varier la valeur de la puissance émise par le ou les éléments de chauffage.

De manière avantageuse, le dispositif comprend un boîtier dans chaque pièce ou zone du local.

De préférence, les moyens de liaison entre le ou chaque boîtier et l'unité de calcul électronique sont des moyens de liaison sans fil.

Selon une caractéristique avantageuse, l'unité de calcul électronique comporte des moyens de commande automatique de la source de puissance du ou de chaque élément de chauffage du dispositif. En particulier, l'unité de calcul électronique est avantageusement configurée pour calculer la valeur de la première puissance de chauffe *P*₁ à appliquer sur la première période de temps *D*₁, à partir des valeurs de *α,* Δ*T*₁(0) et *K_{ref}*, et pour commander la source de puissance du ou de chaque élément de chauffage de manière à générer dans le local la valeur calculée de la première puissance de chauffe *P*₁ sur la première période de temps *D*₁.

A titre d'exemple, selon une première variante, un test susceptible d'être lancé de manière autonome par un tel dispositif de commande automatique comprend la séquence d'étapes suivante :
- lancement de la procédure ;
- calcul de la valeur de la première puissance de chauffe *P*₁ à appliquer sur la première période de temps *D*₁, à partir des valeurs de a , Δ*T*₁(0) et *K_{ref}* ;
- mise en fonctionnement du ou des éléments de chauffage de manière à atteindre la valeur calculée de la première puissance de chauffe *P*₁, enregistrement de la courbe de chauffage *T*_{*i*1}(*t*) pendant une durée préétablie, notamment de l'ordre de 4 heures, puis arrêt du ou des éléments de chauffage ;
- enregistrement de la courbe de refroidissement *T*_{*i*2}(*t*) pendant une durée préétablie, notamment de l'ordre de 4 heures ;
- calcul des valeurs des pentes *a*₁ et *a*₂ des tangentes aux courbes de refroidissement *T*_{*i*1}(*t*) et *T*_{*i*2}(*t*) et, à partir des valeurs des pentes *a*₁ et *a*₂ et des puissances *P*₁ et *P*₂, calcul de la valeur *K_{calc}* du coefficient de déperdition thermique du local.

Selon une deuxième variante, un test susceptible d'être lancé de manière autonome par un tel dispositif de commande automatique comprend la séquence d'étapes suivante :
- lancement de la procédure ;
- calcul de la valeur de la première puissance de chauffe *P*₁ à appliquer sur la première période de temps *D*₁, à partir des valeurs de a , Δ*T*₁(0) et *K_{ref}* ;
- mise en fonctionnement du ou des éléments de chauffage de manière à atteindre la valeur calculée de la première puissance de chauffe *P*₁ ;
- lorsque l'évolution *T*_{*i*1}(*t*) de la température mesurée à l'intérieur du local au cours du chauffage du local est sensiblement linéaire et la température de l'air extérieur *T*_{*e*1} est stable en regard des critères prédéfinis, calcul et stockage de la valeur de la pente *a*₁ de la tangente à la courbe de chauffage *T*_{*i*1}(*t*) et arrêt du ou des éléments de chauffage ;
- lorsque l'évolution *T*_{*i*2}(*t*) de la température mesurée à l'intérieur du local au cours du refroidissement du local est sensiblement linéaire et la température de l'air extérieur *T*_{*e*2} est stable en regard des critères prédéfinis, calcul et stockage de la valeur de la pente *a*₂ de la tangente à la courbe de refroidissement *T*_{*i*2}(*t*);
- à partir des valeurs stockées des pentes *a*₁ et *a*₂ et des valeurs des puissances *P*₁ et *P*₂, calcul de la valeur *K_{calc}* du coefficient de déperdition thermique du local.

Dans ces deux variantes, le ou chaque élément de chauffage du dispositif peut être un élément de chauffage lié au local testé ou un élément de chauffage adjoint spécifiquement pour la réalisation des essais. De même, les capteurs de mesure de température du dispositif peuvent être liés au local ou additionnels.

Selon une caractéristique avantageuse, le logiciel de contrôle interne au dispositif est conçu de telle sorte que chaque test lancé de manière autonome par le dispositif de contrôle automatique est lancé de préférence la nuit, et, si des mesures précédentes ont déjà été réalisées, le dispositif de contrôle automatique optimise le cycle de chaque test de façon à minimiser sa durée et à maximiser la précision de caractérisation.

De préférence, les critères du procédé utilisés par le dispositif de commande automatique tiennent compte de la précision de la mesure de température, c'est-à-dire de la précision de détermination de la pente de l'évolution de température. Plus la précision de la mesure est faible, plus le temps de mesure doit être long pour assurer une détermination de pente correcte.

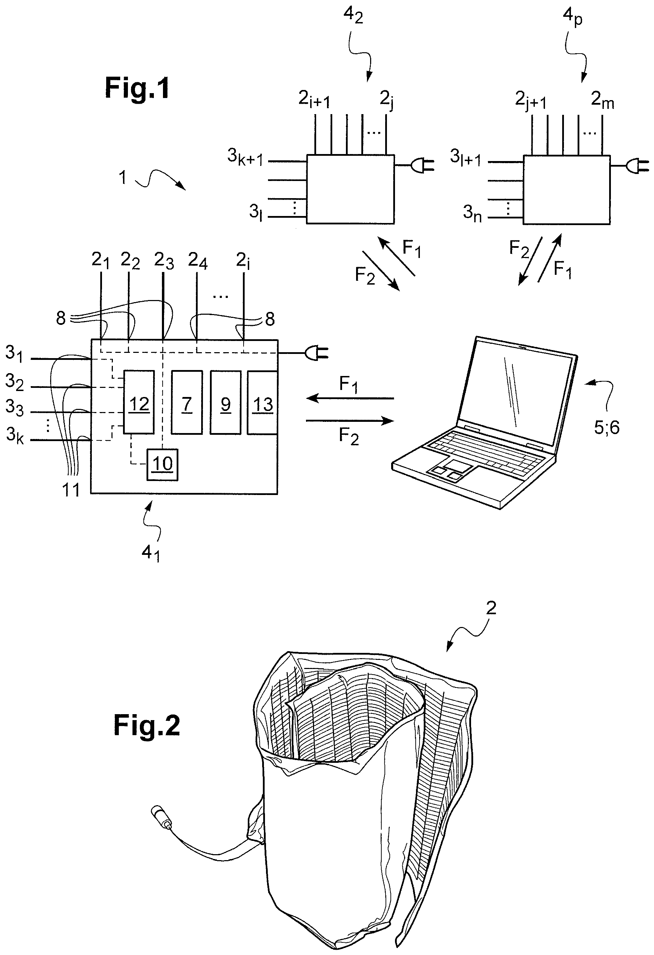

Les caractéristiques et avantages de l'invention apparaîtront dans la description qui va suivre de plusieurs modes de réalisation d'un procédé et d'un dispositif selon l'invention, donnée uniquement à titre d'exemple et faite en se référant aux figures 1 à 6 annexées dans lesquelles :
- la figure 1 est un schéma de principe d'un dispositif pour la mise en oeuvre d'un procédé conforme à l'invention de détermination du coefficient de déperdition thermique K d'un local ;
- la figure 2 est une vue en perspective d'un tapis chauffant électrique pouvant être utilisé pour chauffer le local dans le cadre du procédé selon l'invention, qui est montré dans une position verticale, en étant enroulé sur lui-même, ce qui permet de dissiper toute la puissance thermique dans l'air ;

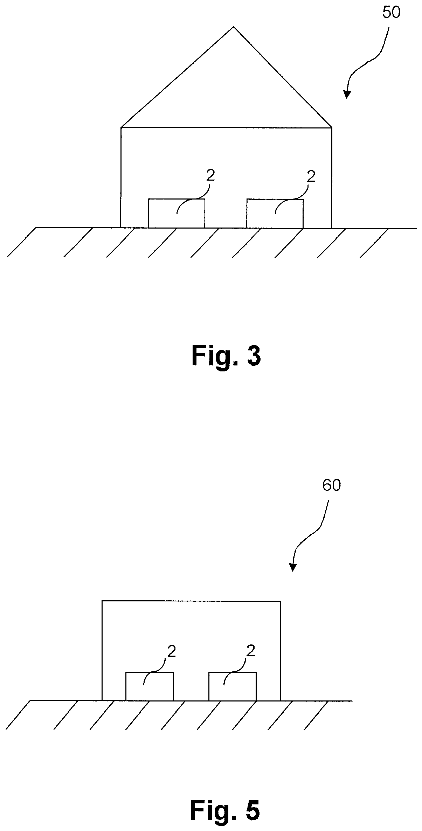

- la figure 3 est une vue schématique d'une maison individuelle dont on souhaite déterminer le coefficient de déperdition thermique K conformément à l'invention, le chauffage de la maison étant assuré par des tapis chauffants électriques tels que montrés sur la figure 2, qui sont rapportés dans la maison ;

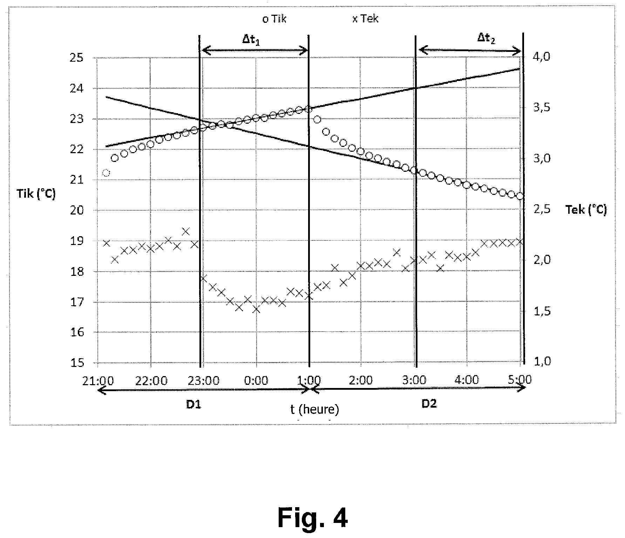

- la figure 4 est une courbe représentative de l'évolution de la température *Tᵢₖ* à l'intérieur de la maison de la figure 3 en fonction du temps au cours de la mise en oeuvre du procédé conforme à l'invention, montrant une première période de temps *D*₁ au cours de laquelle une première puissance de chauffe *P*₁ est appliquée dans la maison, où *P*₁ est telle que le paramètre $α = 1 - \frac{Δ {T}_{1} \left(0\right) {K}_{ref}}{{P}_{1}}$ de la maison est sensiblement égal à 0,5, suivie d'une deuxième période de temps *D*₂ au cours de laquelle une deuxième puissance de chauffe *P*₂ sensiblement nulle est appliquée dans la maison, de manière à laisser la maison en refroidissement libre, l'évolution de la température de l'air extérieur *Tₑₖ* étant également montrée sur cette figure ;
- la figure 5 est une vue schématique d'un bungalow dont on souhaite déterminer le coefficient de déperdition thermique *K* conformément à l'invention, le chauffage du bungalow étant assuré par des tapis chauffants électriques tels que montrés sur la figure 2, qui sont rapportés dans le bungalow ; et

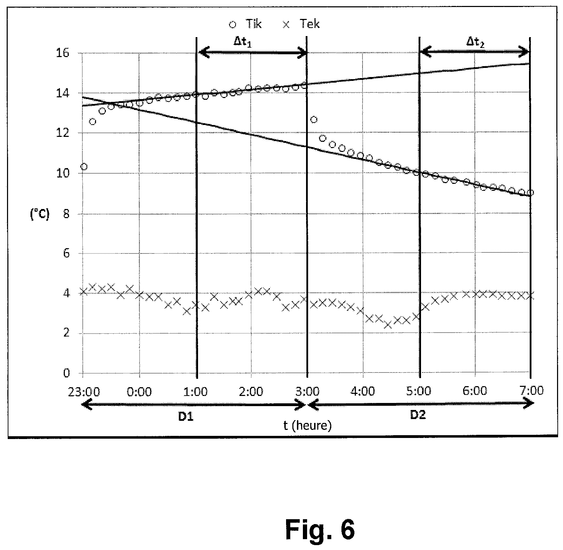

- la figure 6 est une courbe représentative de l'évolution de la température *Tᵢₖ* à l'intérieur du bungalow de la figure 5 en fonction du temps au cours de la mise en oeuvre du procédé conforme à l'invention, montrant une première période de temps *D*₁ au cours de laquelle une première puissance de chauffe *P*₁ est appliquée dans le bungalow, où *P*₁ est telle que le paramètre $α = 1 - \frac{Δ {T}_{1} \left(0\right) {K}_{ref}}{{P}_{1}}$ du bungalow est sensiblement égal à 0,5, suivie d'une deuxième période de temps *D*₂ au cours de laquelle une deuxième puissance de chauffe *P*₂ sensiblement nulle est appliquée dans le bungalow, de manière à laisser le bungalow en refroidissement libre, l'évolution de la température de l'air extérieur *Tₑₖ* étant également montrée sur cette figure.

La figure 1 montre un schéma de principe d'un dispositif 1 pour la détermination du coefficient de déperdition thermique *K* d'un local conformément au procédé de l'invention.

Le dispositif 1 comprend :
- une pluralité d'éléments de chauffage 2₁, 2₂, ..., 2ₘ, qui sont par exemple des tapis chauffants électriques, dont un exemple est montré sur la figure 2 ;
- une pluralité de capteurs de température 3₁, 3₂, ..., 3ₙ, qui sont par exemple des thermocouples de type K ou des sondes Pt100, pour la mesure de la température intérieure du local ;
- une pluralité de boîtiers 4₁, 4₂, ..., 4ₚ;
- une unité de calcul électronique 5, qui est par exemple un ordinateur de type PC portable et qui intègre un module de communication sans fil ;
- une application logicielle 6 comportant des instructions, destinées à être exécutées par l'unité de calcul électronique 5, pour la mise en oeuvre de tout ou partie des étapes de calcul du procédé que sont : le calcul de la première puissance de chauffe *P*₁ à appliquer sur la première période de temps *D*₁, à partir des valeurs de *α,* Δ*T*₁(0) et *K_{ref}* ; le calcul, sur chaque intervalle de temps Δ*t*₁ ou Δ*t*₂, de la pente *a*₁ ou *a*₂ à partir des mesures de température à l'intérieur du local *T*_{*i*1} ou *T*_{*i*2} ; le calcul de la valeur *K_{calc}* du coefficient de déperdition thermique *K* du local à partir des pentes *a*₁ et *a*₂ et des puissances *P*₁ et *P*₂*.*

Les éléments de chauffage 2₁, 2₂, ..., 2ₘ sont destinés à être répartis dans les différentes pièces ou zones du local dont on souhaite déterminer le coefficient de déperdition thermique *K,* le nombre des éléments de chauffage étant adapté en fonction de la valeur de la première puissance de chauffe *P*₁ à appliquer. On prévoit au moins un élément de chauffage 2ᵢ et au moins un capteur de température 3ᵢ dans chaque pièce ou zone du local.

De manière avantageuse, un boîtier 4ᵢ est associé à chaque pièce ou zone du local. Chaque boîtier 4ᵢ comporte une alimentation électrique 7, des prises 8 de liaison avec le ou les éléments de chauffage 2ᵢ de la pièce ou zone, et un module 9 de commutation de puissance permettant de faire basculer les éléments de chauffage 2ᵢ entre leur état éteint et leur état allumé. Chaque boîtier 4ᵢ est destiné à être branché au secteur de manière à alimenter électriquement le ou les éléments de chauffage 2ᵢ de la pièce ou zone.

Chaque boîtier 4ᵢ comporte également un capteur 10 de puissance, qui est par exemple un wattmètre, et des prises 11 de liaison avec le ou les capteurs de température 3ᵢ de la pièce ou zone. Le capteur de puissance 10 et les prises 11 de liaison avec les capteurs de température 3ᵢ de la pièce ou zone sont reliés à un module 12 d'acquisition des mesures de température intérieure et de puissance effectuées dans la pièce ou zone. L'alimentation électrique 7 sert à alimenter le module de commutation 9 et le module d'acquisition 12.

De plus, chaque boîtier 4ᵢ comporte un module 13 de communication sans fil, qui permet d'établir une liaison entre le boîtier 4ᵢ et l'unité de calcul électronique 5 pour la transmission d'informations de l'un à l'autre, comme montré par les flèches F₁ et F₂. En particulier, le module de communication sans fil 13 permet l'envoi d'instructions de commande depuis l'unité de calcul électronique 5 vers le module de commutation de puissance 9 pour le pilotage du ou des éléments de chauffage 2ᵢ de la pièce ou zone, ainsi que la transmission des mesures de température et de puissance réalisées dans la pièce ou zone depuis le module d'acquisition 12 vers l'unité de calcul électronique 5.

Lorsque la détermination de la température de l'air extérieur s'opère, dans le cadre du procédé, par le biais d'une campagne de mesures à intervalles de temps rapprochés, le dispositif 1 comprend également au moins un capteur (non représenté) pour la mesure de la température de l'air extérieur. Ce capteur de mesure de la température extérieure est alors relié à une prise de l'un des boîtiers 4ᵢ, de sorte que les mesures de la température de l'air extérieur sont reçues par le module d'acquisition 12 de ce boîtier.

### EXEMPLE 1

En référence à la figure 3, le procédé selon l'invention est mis en oeuvre pour la détermination du coefficient de déperdition thermique K d'une maison individuelle 50 de construction récente, présentant une isolation par l'intérieur composée d'un salon, une cuisine, une salle de bain, et deux chambres, répartis sur deux étages. Le système de ventilation est une ventilation double flux couplée à un puits climatique. Le procédé est mis en oeuvre alors que la maison est inoccupée et le système de ventilation est inactivé, toutes les prises de ventilation étant bouchées.

Le chauffage de la maison 50 est assuré par des tapis chauffants électriques 2, dont un exemple est montré sur la figure 2, où chaque tapis chauffant a une puissance d'environ 110 W. Les tapis chauffants 2 sont répartis dans les différentes pièces de la maison en étant placés verticalement et enroulés sur eux-mêmes, comme montré sur la figure 2. Ainsi, toute la puissance thermique est dissipée dans l'air, ce qui permet un chauffage rapide et homogène de la maison. Les tapis chauffants 2 constituent une source de puissance contrôlée bien adaptée pour générer l'impulsion de chauffage de la maison requise par le procédé pendant la première période de temps *D*₁.

Le procédé est mis en oeuvre en continu dans sa globalité sur une seule période de temps, comme cela est visible sur la figure 4 où la deuxième période de temps *D*₂, correspondant à une puissance de chauffe de la maison *P*₂ sensiblement nulle, est immédiatement consécutive à la première période de temps *D*₁, correspondant à une puissance de chauffe de la maison *P*₁ strictement positive.

Dans l'exemple de la figure 4, le procédé a lieu sur une période de temps continue ayant une durée d'environ 8 heures, qui commence en début de nuit vers 21h et se termine vers 5h. Dans ces conditions, la contribution du rayonnement solaire au chauffage de la maison est nulle.

De plus, aucune source de puissance autre que les tapis chauffants 2 n'est active dans la maison 50 au cours du procédé. Ainsi, pour chaque période de temps *Dₖ*, la puissance *Pₖ* appliquée est sensiblement égale à la puissance de chauffe imposée par les tapis chauffants 2, aux puissances résiduelles près, provenant notamment du matériel de mesure et de calcul présent dans la maison pour la mise en oeuvre du procédé. Lors de la mise en oeuvre du procédé, des capteurs de puissance, sous la forme de boucles ampèremétriques, mesurent la puissance délivrée dans plusieurs pièces de la maison.

Dans une première étape du procédé, qui correspond à la première période de temps *D*₁, on procède au chauffage de la maison 50 à l'aide des tapis chauffants 2. Dans cet exemple, conformément à l'invention, la première puissance de chauffe *P*₁ appliquée sur la première période de temps *D*₁ est choisie de telle sorte que le paramètre $α = 1 - \frac{Δ {T}_{1} \left(0\right) {K}_{ref}}{{P}_{1}}$ est sensiblement égal à 0,5. Dans cet exemple, la valeur de référence *K_{ref}*, obtenue dans le cadre d'une étude thermique de la maison, est égale à 94 W/K, la température intérieure initiale à l'intérieur de la maison *T*_{*i*1*d*} est 21,2°C, et la température initiale de l'air extérieur *T*_{*e*1*d*} est 2,2°C, ce qui correspond à une valeur de la première puissance de chauffe *P*₁ environ égale à 3738,9 W.

La température ambiante à l'intérieur de la maison *T*_{*i*1} est alors mesurée toutes les minutes dans chacune des cinq pièces de la maison, à savoir le salon, la cuisine, la salle de bain et les deux chambres. A cet effet, un capteur de température, qui est dans cet exemple un thermomètre à résistance de platine Pt100, est installé dans chacune de ces pièces, dans l'air ambiant à environ 200 cm de hauteur, au-dessus des portes.

Dans cet exemple, l'évolution mesurée de la température intérieure est quasiment identique pour les cinq pièces de la maison 50 car le chauffage de la maison est particulièrement bien homogène. Sur la figure 4, seule l'évolution de la température ambiante à l'intérieur du salon est représentée, étant entendu que l'évolution de la température ambiante à l'intérieur des autres pièces de la maison a un profil similaire.

La courbe représentative de l'évolution de la température intérieure de la maison *T*_{*i*1} en fonction du temps pendant la première période de temps *D*₁ est montrée sur la figure 4. Comme visible sur cette figure, la courbe de montée en température de la maison 50 présente une partie sensiblement linéaire sur l'intervalle de temps Δ*t*₁. La mise en équation de cette partie linéaire de la courbe donne : *T*_{*i*1} = 22,1°C + 0,00531 t, avec t en minutes.

La figure 4 fait également apparaître l'évolution de la température de l'air extérieur *T*_{*e*1} pendant la première période de temps *D*₁. La température de l'air extérieur *T*_{*e*1} sur l'intervalle de temps Δ*t*₁ est suffisamment stable pour qu'on puisse la considérer sensiblement constante et égale à la température moyenne sur l'intervalle de temps Δ*t*₁, à savoir dans cet exemple *T*_{*e*1*m*} = 1,9°C.

Dans une deuxième étape du procédé, qui correspond à la deuxième période de temps *D*₂, on applique la deuxième puissance de chauffe *P*₂ sensiblement nulle dans la maison 50, à partir d'une température de départ *T*_{*i*2*d*} = 23,3°C, c'est-à-dire que les tapis chauffants 2 ne fonctionnent pas pendant cette deuxième période *D*₂*.* Comme dans la première étape, la température ambiante à l'intérieur de la maison *T*_{*i*2} est alors mesurée toutes les minutes, au moyen de cinq capteurs de température, qui sont des thermomètres à résistance de platine Pt100, installés dans chaque pièce de la maison, à chaque fois dans l'air ambiant à 200 cm de hauteur. Ici encore, les mesures montrent que l'évolution de la température intérieure est quasiment identique pour les cinq pièces de la maison.

La figure 4 montre la courbe représentative de l'évolution de la température intérieure de la maison *T*_{*i*2} en fonction du temps pendant la deuxième période de temps *D*₂*.* Comme visible sur cette figure, la courbe de descente en température de la maison 50 présente une partie sensiblement linéaire sur l'intervalle de temps Δ*t*₂. La mise en équation de cette partie linéaire de la courbe donne : *T*_{*i*2} = 22,1°C - 0,00703 t, avec t en minutes.

L'évolution de la température de l'air extérieur *T*_{*e*2} pendant la deuxième période de temps *D*₂ est également montrée sur la figure 4. Comme dans la première étape, la température de l'air extérieur *T*_{*e*2} sur l'intervalle de temps Δ*t*₂ est suffisamment stable pour qu'on puisse la considérer sensiblement constante et égale à la température moyenne sur l'intervalle de temps Δ*t*₂, à savoir dans cet exemple *T*_{*e*2*m*} = 2,0°C.

Comme ${K}_{calc} = \frac{{a}_{1} {P}_{2} - {a}_{2} {P}_{1}}{{a}_{1} Δ {T}_{2 m} - {a}_{2} Δ {T}_{1 m}}$ d'après l'équation (2) précédente, en prenant Δ*T*_{1*m*} = 21,0°C, Δ*T*_{2*m*} = 19,0°C, *P*₁ = 3738,9 W, *P*₂ = 153,5 W, on obtient la valeur du coefficient de déperdition thermique *K* de la maison 50 : ${K}_{calc} = 109,0 W / K .$

Le procédé de l'invention permet également d'accéder à la valeur de l'inertie ou capacité thermique effective *C* de la maison 50, telle que définie précédemment, à savoir l'énergie nécessaire pour augmenter la température ambiante de la maison de 1 K à température extérieure constante pendant la durée de la sollicitation : $C = 17,7 MJ / K .$

### EXEMPLE 2

En référence aux figures 5 et 6, le procédé selon l'invention est mis en oeuvre pour la détermination du coefficient de déperdition thermique *K* d'un bungalow 60 présentant une surface au sol de 12,4 m², une hauteur intérieure de 2,4 m, un volume de 29,76 m³ et une surface totale d'enveloppe de 62,7 m². La paroi externe du bungalow 60 est constituée de panneaux sandwich isolants comprenant une couche de polyuréthane d'épaisseur 4 cm insérée entre deux plaques de métal, d'une porte et de deux fenêtres triple vitrage.

Une isolation supplémentaire a été ajoutée à l'enveloppe, qui comprend les matériaux suivants :
- 6 cm de laine de verre, une plaque plâtre de 13 mm et une couche d'environ 1 cm de plâtre projeté pour les murs ;
- 3 cm de polystyrène expansé pour le sol et le plafond, le sol étant aussi recouvert d'un panneau de bois à lamelles minces orientées (OSB).

Le procédé est mis en oeuvre alors que le bungalow 60 est inoccupé.

Une étude thermique du bungalow 60 prévoit une valeur de référence *K_{ref}* de 32,7 W/K. Le bungalow est un bâtiment très léger, sa constante de temps est de quelques heures.

Comme dans l'Exemple 1, le chauffage du bungalow 60 est assuré par des tapis chauffants électriques 2, tels que montrés sur la figure 2, où chaque tapis chauffant a une puissance d'environ 110 W. Les tapis chauffants 2 sont répartis dans le bungalow en étant placés verticalement et enroulés sur eux-mêmes, comme montré sur la figure 2, ce qui permet un chauffage rapide et homogène du bungalow.

Le procédé selon l'invention est mis en oeuvre en continu dans sa globalité sur une seule période de temps nocturne, afin de s'affranchir de la contribution du rayonnement solaire au chauffage du bungalow 60. On procède tout d'abord à un chauffage du bungalow sur une première période de temps *D*₁ de 23h à 3h, ce qui correspond à l'application d'une première puissance de chauffe *P*₁ strictement positive, puis à un refroidissement libre du bungalow sur une deuxième période de temps *D*₂ de 3h à 7h, ce qui correspond à l'application d'une deuxième puissance de chauffe *P*₂ sensiblement nulle. La deuxième période de temps *D*₂ est ainsi immédiatement consécutive à la première période de temps *D*₁.

Aucune source de puissance autre que les tapis chauffants 2 n'est active dans le bungalow 60 au cours du procédé. Ainsi, pour chaque période de temps *Dₖ*, la puissance *Pₖ* appliquée est sensiblement égale à la puissance de chauffe imposée par les tapis chauffants 2, aux puissances résiduelles près, provenant notamment du matériel de mesure et de calcul présent dans la maison pour la mise en oeuvre du procédé. Des capteurs de puissance, sous la forme de boucles ampèremétriques, mesurent la puissance délivrée dans le bungalow lors de la mise en oeuvre du procédé.

Dans une première étape du procédé, qui correspond à la première période de temps *D*₁, on procède au chauffage du bungalow 60 à l'aide des tapis chauffants 2. Dans cet exemple, conformément à l'invention, la première puissance de chauffe *P*₁ appliquée sur la première période de temps *D*₁ est choisie de telle sorte que le paramètre $α = 1 - \frac{Δ {T}_{1} \left(0\right) {K}_{ref}}{{P}_{1}}$ est sensiblement égal à 0,5. Dans cet exemple, la valeur de référence *K_{ref}* est égale à 32,7 W/K, la température intérieure initiale à l'intérieur du bungalow *T*_{*i*1*d*} est 10,4°C, et la température initiale de l'air extérieur *T*_{*e*1*d*} est 4,1°C, ce qui correspond à une valeur de la première puissance de chauffe *P*₁ environ égale à 432,8 W.

La température ambiante à l'intérieur du bungalow *T*_{*i*1} est alors mesurée toutes les dix secondes. A cet effet, un capteur de température, qui est dans cet exemple un thermocouple de type K, est installé dans le bungalow, dans l'air ambiant à 180 cm de hauteur.

La courbe représentative de l'évolution de la température intérieure du bungalow *T*_{*i*1} en fonction du temps pendant la première période de temps *D*₁ est montrée sur la figure 6. Comme visible sur cette figure, la courbe de montée en température du bungalow 60 présente une partie sensiblement linéaire sur l'intervalle de temps Δ*t*₁. La mise en équation de cette partie linéaire de la courbe donne : *T*_{*i*1} = 13,4°C + 0,00413 t, avec t en secondes.

La figure 6 fait également apparaître l'évolution de la température de l'air extérieur *T*_{*e*1} pendant la première période de temps *D*₁. La température de l'air extérieur *T*_{*e*1} sur l'intervalle de temps Δ*t*₁ est suffisamment stable pour qu'on puisse la considérer sensiblement constante et égale à la température moyenne sur l'intervalle de temps Δ*t*₁, à savoir dans cet exemple T_{*e*1*m*} = 3,8°C.

Dans une deuxième étape du procédé, qui correspond à la deuxième période de temps *D*₂, on applique la deuxième puissance de chauffe *P*₂ sensiblement nulle dans le bungalow 60, à partir d'une température de départ *T*_{*i*2*d*} = 14,4°C, c'est-à-dire que les tapis chauffants 2 ne fonctionnent pas pendant cette deuxième période *D*₂*.* Comme dans la première étape, la température ambiante à l'intérieur du bungalow *T*_{*i*2} est alors mesurée toutes les dix secondes, au moyen d'un thermocouple de type K placé au centre du bungalow, dans l'air ambiant à 180 cm de hauteur.

La figure 6 montre la courbe représentative de l'évolution de la température intérieure du bungalow *T*_{*i*2} en fonction du temps pendant la deuxième période de temps *D*₂*.* Comme visible sur cette figure, la courbe de descente en température du bungalow 60 présente une partie sensiblement linéaire sur l'intervalle de temps Δ*t*₂. La mise en équation de cette partie linéaire de la courbe donne : *T*_{*i*2} = 11°C - 0,00871 t, avec t en secondes.

L'évolution de la température de l'air extérieur *T*_{*e*2} pendant la même période de temps *D*₂ est également montrée sur la figure 6. Comme dans la première étape, la température de l'air extérieur *T*_{*e*2} sur l'intervalle de temps Δ*t*₂ est suffisamment stable pour qu'on puisse la considérer sensiblement constante et égale à la température moyenne sur l'intervalle de temps Δ*t*₂, à savoir dans cet exemple *T*_{*e*2*m*} = 3,4°C.

Comme ${K}_{calc} = \frac{{a}_{1} {P}_{2} - {a}_{2} {P}_{1}}{{a}_{1} Δ {T}_{2 m} - {a}_{2} Δ {T}_{1 m}}$ d'après l'équation (2) précédente, en prenant Δ*T*_{1*m*} = 10,5°C, Δ*T*_{2*m*} = 5,7°C, *P*₁ = 432,8 W, *P*₂ = 11,0 W, on obtient la valeur du coefficient de déperdition thermique K du bungalow 60 : ${K}_{calc} = 33,2 W / K .$

Le procédé de l'invention permet également d'accéder à la valeur de l'inertie ou capacité thermique effective *C* du bungalow 60, telle que définie précédemment, à savoir l'énergie nécessaire pour augmenter la température ambiante du bungalow de 1 K à température extérieure constante pendant la durée de la sollicitation : $C = 1,3 MJ / K .$

En pratique, dans les deux exemples ci-dessus, les étapes de sélection des intervalles de temps Δ*tₖ* pour le traitement des données, de linéarisation, et de calcul de la valeur *K_{calc}* du coefficient de déperdition thermique à partir des pentes *aₖ,* sont avantageusement réalisées au moyen d'une unité de calcul électronique appartenant à un dispositif tel que décrit en référence à la figure 1.

L'invention n'est pas limitée aux exemples décrits ci-dessus. En particulier, comme déjà évoqué, le procédé selon l'invention peut être mis en oeuvre indifféremment avec des moyens de chauffage qui équipent le local de manière fixe ou avec des moyens de chauffage qui sont rapportés dans le local spécifiquement pour la mise en oeuvre du procédé, pour autant que la puissance fournie par ces moyens de chauffage pour les impulsions requises par le procédé puisse être déterminée de manière précise.

Par ailleurs, dans le cas d'un local de grande taille, tel qu'un immeuble à plusieurs étages, le procédé de l'invention peut être utilisé soit pour la détermination du coefficient de déperdition thermique K du local dans son intégralité, auquel cas le chauffage de l'air doit être assuré dans tout le local, soit pour la détermination du coefficient de déperdition thermique K d'une partie seulement du local. Ainsi, dans le cas d'un immeuble, on peut ne tester qu'un seul appartement de l'immeuble. Pour cela, il est préférable que les parties mitoyennes à l'appartement mesuré soient dans un état thermique représentatif de leur état d'occupation normal, en particulier que les parties mitoyennes normalement habitées soient à une température ambiante de l'ordre de 20°C. Il est également préférable de minimiser autant que possible les pertes thermiques, par exemple en sur-isolant les parois mitoyennes au moyen d'une isolation rapportée, ou encore en conditionnant les parties mitoyennes de la même manière que l'appartement mesuré de façon à assurer un écart de température de part et d'autre de la paroi mitoyenne aussi proche de zéro que possible.

Toutefois, un avantage du procédé selon l'invention est qu'il limite les transferts thermiques entre l'appartement mesuré et les parties mitoyennes, grâce à la réduction du temps de mesure. Il y a ainsi moins de nécessité d'apporter des corrections à la valeur *K_{calc}* du coefficient de déperdition thermique obtenue. Le procédé conforme à l'invention est ainsi particulièrement bien adapté pour déterminer le coefficient de déperdition thermique de parties d'immeubles de logement collectif.

## Revendications

1. Procédé de détermination du coefficient de déperdition thermique *K* d'un local, **caractérisé en ce qu'**il comprend des étapes dans lesquelles :
- on procède, dans le local, sur deux périodes de temps *D*₁ et *D*₂ successives :
i. sur la première période de temps *D*₁, à l'application d'une première puissance de chauffe *P*₁ du local, et à une campagne de mesures d'au moins une température à l'intérieur du local *T*_{*i*1} à intervalles de temps rapprochés, ainsi qu'à la détermination de la température de l'air extérieur *T*_{*e*1} à intervalles de temps rapprochés, la première puissance de chauffe *P*₁ étant telle que le paramètre $α = 1 - \frac{Δ {T}_{1} \left(0\right) {K}_{ref}}{{P}_{1}}$ est inférieur ou égal à 0,8 avec Δ*T*₁(0) = *T*_{*i*1}(*t* = 0) - *Tₑₘ*, où *t* = 0 est le point de départ de la première période de temps *D*₁, *Tₑₘ* est la température moyenne de l'air extérieur sur l'ensemble des périodes de temps *D*₁ et *D*₂, et *K_{ref}* est la valeur de référence du coefficient de déperdition thermique *K* du local déterminée à partir du coefficient de transfert thermique de l'enveloppe du local obtenu selon la norme ISO 13789:2007, puis
ii. sur la deuxième période de temps *D*₂, à l'application d'une deuxième puissance de chauffe *P*₂ du local sensiblement nulle, et à une campagne de mesures d'au moins une température à l'intérieur du local *T*_{*i*2} à intervalles de temps rapprochés, ainsi qu'à la détermination de la température de l'air extérieur *T*_{*e*2} à intervalles de temps rapprochés ;
- pour chacune des première et deuxième périodes de temps *D*₁ et D₂, on sélectionne un intervalle de temps Δ*t*₁ ou Δ*t*₂ pour lequel l'évolution *T*_{*i*1}(*t*) ou *T*_{*i*2}(*t*) est sensiblement linéaire, où les intervalles de temps Δ*t*₁ et Δ*t*₂ sont tels que l'intervalle de temps Δ*t*₁ s'étend jusqu'à la fin de la première période *D*₁ d'application de la première puissance de chauffe *P*₁ et tels que, lorsqu'on superpose les points de départ de la première période *D*₁ et de la deuxième période *D*₂, les intervalles de temps Δ*t*₁ et Δ*t*₂ ont le même point de fin ;
- on détermine, sur chaque intervalle de temps Δ*t*₁ ou Δ*t*₂, la pente *a*₁ ou *a*₂ de la tangente à la courbe (*Tᵢₖ*(*t*))_{*k*=1 ou 2} ;
- on déduit la valeur *K_{calc}* du coefficient de déperdition thermique K du local à partir des pentes *a*₁ et *a₂.*

2. Procédé selon la revendication 1, **caractérisé en ce que** les intervalles de temps Δ*t*₁ et Δ*t*₂ ont la même durée.

3. Procédé selon l'une quelconque des revendications 1 ou 2, **caractérisé en ce que** la première période de temps *D*₁, sur laquelle est appliquée la première puissance de chauffe *P*₁, a une durée inférieure ou égale à 4 heures.

4. Procédé selon l'une quelconque des revendications précédentes, **caractérisé en ce que** la première puissance de chauffe *P*₁ est telle que le paramètre $α = 1 - \frac{Δ {T}_{1} \left(0\right) {K}_{ref}}{{P}_{1}}$ est inférieur ou égal à 0,75.

5. Procédé selon l'une quelconque des revendications précédentes, **caractérisé en ce que** la première puissance de chauffe *P*₁ est telle que le paramètre $α = 1 - \frac{Δ {T}_{1} \left(0\right) {K}_{ref}}{{P}_{1}}$ est inférieur ou égal à 0,7.

6. Procédé selon l'une quelconque des revendications précédentes, **caractérisé en ce que** la première puissance de chauffe *P*₁ est telle que le paramètre $α = 1 - \frac{Δ {T}_{1} \left(0\right) {K}_{ref}}{{P}_{1}}$ est supérieur ou égal à 0,25, de préférence supérieur ou égal à 0,3.

7. Procédé selon l'une quelconque des revendications précédentes, **caractérisé en ce que**, suite à la détermination de la valeur *K_{calc}* du coefficient de déperdition thermique K du local à partir des pentes *a*₁ et *a*₂, on calcule la valeur du paramètre ${α}_{calc} = 1 - \frac{Δ {T}_{1} \left(0\right) {K}_{calc}}{{P}_{1}}$ et on vérifie que *α_{calc}* est bien dans la gamme de valeurs prédéfinie pour le paramètre *α*.

8. Procédé selon l'une quelconque des revendications précédentes, **caractérisé en ce que** la première puissance de chauffe *P*₁ comprend une puissance de chauffe *P*ᵢₘₚ₁ imposée au moyen d'une source de puissance contrôlée.

9. Procédé selon l'une quelconque des revendications précédentes, **caractérisé en ce que** le procédé est mis en oeuvre alors que le local est inoccupé.

10. Procédé selon l'une quelconque des revendications précédentes, **caractérisé en ce que**, sur chacune des première et deuxième périodes de temps *D*₁ et *D*₂, la température de l'air extérieur *T*_{*e*1} ou *T*_{*e*2} est stable.

11. Procédé selon l'une quelconque des revendications précédentes, **caractérisé en ce que**, sur chacune des première et deuxième périodes de temps *D*₁ et *D*₂, le rayonnement solaire est faible, de préférence nul.

12. Procédé selon l'une quelconque des revendications précédentes, **caractérisé en ce qu'**il est réalisé dans sa globalité sur une seule période nocturne.

13. Procédé selon l'une quelconque des revendications précédentes, **caractérisé en ce que**, sur chacune des première et deuxième périodes de temps *D*₁ et *D*₂, tout système de ventilation fixe équipant le local est désactivé.

14. Support d'enregistrement d'informations, **caractérisé en ce qu'**il comporte des instructions pour la mise en oeuvre des étapes de calcul d'un procédé de détermination du coefficient de déperdition thermique *K* d'un local selon l'une quelconque des revendications précédentes lorsque ces instructions sont exécutées par une unité de calcul électronique, les étapes de calcul comprenant :
- le calcul de la première puissance de chauffe *P*₁ à appliquer sur la première période de temps *D*₁, à partir des valeurs de *α,* Δ*T*₁(0) et *K_{ref}*,
- le calcul, sur chaque intervalle de temps Δ*t*₁ ou Δ*t*₂, de la pente *a*₁ ou *a*₂ à partir des mesures de température à l'intérieur du local *T*_{*i*1} ou *T*_{*i*2},
- le calcul de la valeur *K_{calc}* du coefficient de déperdition thermique *K* du local à partir des pentes *a*₁ et *a*₂*.*

15. Support d'enregistrement d'informations selon la revendication 14, **caractérisé en ce qu'**il comporte en outre des instructions pour la commande, en fonction de données d'entrée, d'une source de puissance contrôlée utilisée pour appliquer la première puissance de chauffe *P*₁ dans le local.

16. Dispositif pour la mise en oeuvre d'un procédé selon l'une quelconque des revendications 1 à 13, **caractérisé en ce qu'**il comprend :
- au moins un élément de chauffage comportant une source de puissance contrôlée,
- au moins un capteur de température qui mesure une température à l'intérieur du local *Tᵢₖ*,
- au moins un capteur de puissance qui mesure la puissance de chauffe *Pₖ* délivrée dans le local,
- au moins un module d'acquisition pour acquérir les mesures de température à l'intérieur du local *Tₖ*, les mesures de puissance de chauffe *Pₖ* délivrée dans le local, la température de l'air extérieur *Tₑₖ*,
- une unité de calcul électronique,
- un support d'enregistrement d'informations comportant des instructions, destinées à être exécutées par l'unité de calcul électronique, pour la mise en oeuvre des étapes de calcul du procédé que sont : le calcul de la première puissance de chauffe *P*₁ à appliquer sur la première période de temps *D*₁, à partir des valeurs de *α,* Δ*T*₁(0) et *K_{ref}* ; le calcul, sur chaque intervalle de temps Δ*t*₁ ou Δ*t*₂, de la pente *a*₁ ou *a*₂ à partir des mesures de température à l'intérieur du local *T*_{*i*1} ou *T*_{*i*2} ; le calcul de la valeur *K_{calc}* du coefficient de déperdition thermique *K* du local à partir des pentes *a*₁ et *a*₂*.*

17. Dispositif selon la revendication 16, **caractérisé en ce que** le ou chaque élément de chauffage est configuré pour chauffer l'air du local.

18. Dispositif selon l'une quelconque des revendications 16 ou 17, **caractérisé en ce que** le ou chaque capteur de température est configuré pour mesurer la température de l'air à l'intérieur du local.

19. Dispositif selon l'une quelconque des revendications 16 à 18, **caractérisé en ce que** l'unité de calcul électronique comporte des moyens de commande de la source de puissance du ou de chaque élément de chauffage.

20. Dispositif selon l'une quelconque des revendications 16 à 19, **caractérisé en ce qu'**il comprend au moins un boîtier qui est situé dans une pièce ou zone du local et qui comporte :
- un module de gestion de puissance, auquel est connectée la source de puissance du ou de chaque élément de chauffage situé dans ladite pièce ou zone du local,
- un module de mesure de température, auquel est connecté le ou chaque capteur de température situé dans ladite pièce ou zone du local,
- un capteur de puissance, qui mesure la puissance de chauffe délivrée dans ladite pièce ou zone du local,
- des moyens de liaison entre le boîtier et l'unité de calcul électronique, de telle sorte que l'unité de calcul électronique est apte à recevoir les mesures de température et de puissance et à commander le module de gestion de puissance.

21. Dispositif selon la revendication 20, **caractérisé en ce qu'**il comprend un boîtier dans chaque pièce ou zone du local.

22. Dispositif selon l'une quelconque des revendications 20 ou 21, **caractérisé en ce que** les moyens de liaison entre le ou chaque boîtier et l'unité de calcul électronique sont des moyens de liaison sans fil.

## Patentansprüche

1. Verfahren zur Bestimmung des Wärmeverlustkoeffizienten *K* eines Raums, **dadurch gekennzeichnet, dass** es die folgenden Schritte umfasst:
- Durchführen, in dem Raum, über zwei aufeinanderfolgende Zeiträume *D*₁, und *D*₂:
i. über den ersten Zeitraum *D*₁, Anwenden einer ersten Heizleistung *P*₁ des Raums und einer Messkampagne mindestens einer Temperatur im Innern des Raums *T*_{*i*1} in angenäherten Zeitintervallen sowie Bestimmen der Außenlufttemperatur *T*ₑ₁ in angenäherten Zeitintervallen, wobei die erste Heizleistung *P*₁ derart ist, dass der Parameter α = 1 - $\frac{Δ {T}_{1} \left(0\right) {K}_{ref}}{{P}_{1}}$ kleiner als oder gleich 0,8 ist mit Δ*T*₁(0) = *T*_{*i*1}(*t*= 0) - *T*ₑₘ, wobei *t* = 0 der Startpunkt des ersten Zeitraums *D*₁ ist, *T*ₑₘ die Durchschnittstemperatur der Außenluft über die Gesamtheit der Zeiträume *D*₁, und *D*₂ ist und *K_{ref}* der Referenzwert des Wärmeverlustkoeffizienten *K* des Raums ist, bestimmt aus dem Wärmetransferkoeffizienten der Hülle des Raums, erhalten gemäß der Norm ISO 13789:2007, dann
ii. über den zweiten Zeitraum *D*₂ Anwenden einer zweiten Heizleistung *P*₂ des Raums von etwa Null und einer Messkampagne mindestens einer Temperatur im Innern des Raums *T*_{*i*2} in angenäherten Zeitintervallen sowie Bestimmen der Außenlufttemperatur *T*_{*e*2} in angenäherten Zeitintervallen,
- für jeden des ersten und zweiten Zeitraums *D*₁, und *D*₂ Auswählen eines Zeitintervalls Δ*t*₁ oder Δ*t*₂, für das die Entwicklung *T*_{*i*1}(t) oder *T*_{*i*2}(t) etwa linear ist, wobei die Zeitintervalle Δ*t*₁ und Δ*t*₂ derart sind, dass sich das Zeitintervall Δ*t*₁ bis zum Ende des ersten Zeitraums *D*₁, der Anwendung der ersten Heizleistung *P*₁ erstreckt und derart, dass, wenn man die Startpunkte des ersten Zeitraums *D*₁, und des zweiten Zeitraums *D*₂ übereinanderlegt, die Zeitintervalle Δ*t*₁ und Δ*t*₂ denselben Endpunkt haben,
- Bestimmen über jedes Zeitintervall Δ*t*₁ oder Δ*t*₂ der Neigung *a*₁ oder *a*₂ der Tangente der Kurve (*Tiₖ*(*t*))*ₖ* = _{1 oder 2},
- Ableiten des Wertes *K_{calc}* des Wärmeverlustkoeffizienten *K* des Raums aus den Neigungen *a*₁ und *a*₂*.*

2. Verfahren nach Anspruch 1, **dadurch gekennzeichnet, dass** die Zeitintervalle Δ*t₁* und Δ*t*₂ dieselbe Dauer haben.

3. Verfahren nach einem der Ansprüche 1 oder 2, **dadurch gekennzeichnet, dass** der erste Zeitraum *D*₁, auf den die erste Heizleistung *P*₁ angewendet wird, eine Dauer von unter oder gleich 4 Stunden hat.

4. Verfahren nach einem der vorangehenden Ansprüche, **dadurch gekennzeichnet, dass** die erste Heizleistung *P*₁ derart ist, dass der Parameter $α = 1 - \frac{Δ {T}_{1} \left(0\right) {K}_{ref}}{{P}_{1}}$ kleiner oder gleich 0,75 ist.

5. Verfahren nach einem der vorangehenden Ansprüche, **dadurch gekennzeichnet, dass** die erste Heizleistung *P*₁ derart ist, dass der Parameter $α = 1 - \frac{Δ {T}_{1} \left(0\right) {K}_{ref}}{{P}_{1}}$ kleiner oder gleich 0,7 ist.

6. Verfahren nach einem der vorangehenden Ansprüche, **dadurch gekennzeichnet, dass** die erste Heizleistung *P*₁ derart ist, dass der Parameter $α = 1 - \frac{Δ {T}_{1} \left(0\right) {K}_{ref}}{{P}_{1}}$ größer oder gleich 0,25, vorzugsweise größer oder gleich 0,3, ist.

7. Verfahren nach einem der vorangehenden Ansprüche, **dadurch gekennzeichnet, dass** nach dem Bestimmen des Wertes *K_{calc}* des Wärmeverlustkoeffizienten *K* des Raums aus den Neigungen *a*₁ und *a*₂ der Wert des Parameters ${α}_{calc} = 1 - \frac{Δ {T}_{1} \left(0\right) {K}_{calc}}{{P}_{1}}$ berechnet wird und überprüft wird, dass sich α*_{calc}* wirklich in dem für den Parameter a vorbestimmten Wertebereich befindet.

8. Verfahren nach einem der vorangehenden Ansprüche, **dadurch gekennzeichnet, dass** die erste Heizleistung *P*₁ eine mittels einer gesteuerten Leistungsquelle erzwungene Heizleistung *P*ᵢₘₚ₁ umfasst.

9. Verfahren nach einem der vorangehenden Ansprüche, **dadurch gekennzeichnet, dass** das Verfahren durchgeführt wird, wenn der Raum nicht belegt ist.

10. Verfahren nach einem der vorangehenden Ansprüche, **dadurch gekennzeichnet, dass** die Außenlufttemperatur *T*ₑ₁ oder *T*_{*e*2} über jeden des ersten und zweiten Zeitraums *D*₁, und *D*₂ stabil ist.

11. Verfahren nach einem der vorangehenden Ansprüche, **dadurch gekennzeichnet, dass** die Sonnenstrahlung über jeden des ersten und zweiten Zeitraums *D*₁, und *D*₂ schwach, vorzugsweise Null, ist.

12. Verfahren nach einem der vorangehenden Ansprüche, **dadurch gekennzeichnet, dass** es in seiner Gesamtheit über einen einzigen Nachtzeitraum durchgeführt wird.

13. Verfahren nach einem der vorangehenden Ansprüche, **dadurch gekennzeichnet, dass** jedes feste Lüftungssystem, das den Raum ausstattet, über jeden des ersten und zweiten Zeitraums *D*₁ und *D*₂ deaktiviert ist.

14. Informationsaufzeichnungsmedium, **dadurch gekennzeichnet, dass** es Befehle für die Umsetzung der Berechnungsschritte eines Verfahrens zur Bestimmung des Wärmeverlustkoeffizienten *K* eines Raums nach einem der vorangehenden Ansprüche aufweist, wenn diese Befehle von einer elektronischen Recheneinheit durchgeführt werden, wobei die Rechenschritte umfassen:
- das Berechnen der ersten, auf den erste Zeitraum *D*₁, anzuwendenden Heizleistung *P*₁ aus den Werten von *α*, Δ*T*₁(0) und *K_{ref},*
- das Berechnen über jedes Zeitintervall Δ*t*₁ oder Δ*t*₂ der Neigung *a*₁ oder *a*₂ aus Temperaturmessungen im Innern des Raums *T*_{*i*1} oder *T*_{*i*2},
- das Berechnen des Wertes *K_{calc}* des Wärmeverlustkoeffizienten *K* des Raums aus den Neigungen *a*₁ und *a*₂*.*

15. Informationsaufzeichnungsmedium nach Anspruch 14, **dadurch gekennzeichnet, dass** es ferner Befehle für die Steuerung in Abhängigkeit von Eingangsdaten einer gesteuerten Leistungsquelle aufweist, die verwendet wird, um die erste Heizleistung *P*₁ in dem Raum anzuwenden.

16. Vorrichtung für die Umsetzung eines Verfahrens nach einem der Ansprüche 1 bis 13, **dadurch gekennzeichnet, dass** sie umfasst:
- mindestens ein Heizelement, aufweisend eine gesteuerte Leistungsquelle,
- mindestens einen Temperatursensor, der eine Temperatur im Innern des Raums *Tᵢₖ* misst,
- mindestens einen Leistungssensor, der die in dem Raum bereitgestellte Heizleistung *Pₖ* misst,
- mindestens ein Erfassungsmodul, um die Temperaturmessungen im Innern des Raums *Tᵢₖ*, die Messungen der in dem Raum bereitgestellten Heizleistung *Pₖ,* die Außenlufttemperatur *Tₑₖ* zu erfassen,
- eine elektronische Recheneinheit,
- ein Informationsaufzeichnungsmedium, das Befehle aufweist, die bestimmt sind, von der elektronischen Recheneinheit für die Umsetzung der Rechenschritte des Verfahrens durchgeführt zu werden, die sind: das Berechnen der ersten, auf den erste Zeitraum *D*₁, anzuwendenden Heizleistung *P*₁ aus den Werten von α, Δ*T*₁(0) und *K_{ref},* das Berechnen über jedes Zeitintervall Δ*t*₁ oder Δ*t*₂ der Neigung *a*₁ oder *a*₂ aus Temperaturmessungen im Innern des Raums *T*_{*i*1} oder *T*_{*i*2}, das Berechnen des Wertes *K_{calc}* des Wärmeverlustkoeffizienten *K* des Raums aus den Neigungen *a*₁ und *a*₂*.*

17. Vorrichtung nach Anspruch 16, **dadurch gekennzeichnet, dass** das oder jedes Heizelement konfiguriert ist, um die Luft des Raums zu heizen.

18. Vorrichtung nach einem der Ansprüche 16 oder 17, **dadurch gekennzeichnet, dass** der oder jeder Temperatursensor konfiguriert ist, um die Temperatur der Luft im Innern des Raums zu messen.

19. Vorrichtung nach einem der Anspruche 16 bis 18, **dadurch gekennzeichnet, dass** die elektronische Recheneinheit Steuermittel der Leistungsquelle des oder jedes Heizelements aufweist.

20. Vorrichtung nach einem der Anspruche 16 bis 19, **dadurch gekennzeichnet, dass** sie mindestens ein Gehäuse umfasst, das sich in einem Zimmer oder einer Zone des Raums befindet und das aufweist:
- ein Leistungsverwaltungsmodul, mit dem die Leistungsquelle des oder jedes Heizelements verbunden ist, das sich in dem Zimmer oder der Zone des Raums befindet,
- ein Temperaturmessmodul, mit dem der oder jeder Temperatursensor verbunden ist, der sich in dem Zimmer oder der Zone des Raums befindet,
- einen Leistungssensor, der die in das Zimmer oder die Zone des Raums abgegebene Heizleistung misst,
- Verbindungsmittel zwischen dem Gehäuse und der elektronischen Recheneinheit derart, dass die elektronische Recheneinheit imstande ist, die Temperatur- und Leistungsmessungen zu empfangen und das Leistungsverwaltungsmodul zu steuern.

21. Vorrichtung nach Anspruch 20, **dadurch gekennzeichnet, dass** sie ein Gehäuse in jedem Zimmer oder Zone des Raums umfasst.

22. Vorrichtung nach einem der Ansprüche 20 oder 21, **dadurch gekennzeichnet, dass** die Verbindungsmittel zwischen dem oder jedem Gehäuse und der elektronischen Recheneinheit drahtlose Verbindungsmittel sind.

## Claims

1. A method for determining the heat loss coefficient *K* of a premises, **characterized in that** it comprises steps in which:
- there is undertaken, in the premises, over two successive time periods *D*₁ and *D*₂ :
i. over the first time period *D*₁, the application of a first heating power *P*₁ of the premises, and a campaign of measurements of at least one temperature inside the premises *T*_{*i*1} at closely-spaced time intervals, as well as the determination of the temperature of the outside air *T*_{*e*1} at closely-spaced time intervals, the first heating power *P*₁ being such that the parameter $α = 1 - \frac{Δ {T}_{1} \left(0\right) {K}_{ref}}{{P}_{1}}$ is less than or equal to 0.8 with *ΔT*₁(0) = *T*_{*i*1}(*t*=0) *- Tₑₘ*, where *t* = 0 is the starting point of the first time period *D*₁, *Tₑₘ* is the average temperature of the outside air over all of the time periods *D*₁ and *D*₂, and *K_{ref}* is a reference value of the heat loss coefficient *K* of the premises determined on the basis of the heat transfer coefficient of the envelope of the premises obtained according to the standard ISO 13789:2007, and then
ii. over the second time period *D*₂, the application of a substantially zero second heating power *P*₂ of the premises, and a campaign of measurements of at least one temperature inside the premises *T*_{*i*2} at closely-spaced time intervals, as well as the determination of the temperature of the outside air *T*_{*e*2} at closely-spaced time intervals;
- for each of the first and second time periods *D*₁ and *D*₂, a time interval Δ*t*₁ or Δ*t*₂ is selected for which the evolution *T*_{*i*1}(*t*) or *T*_{*i*2}(*t*) is substantially linear, where the time intervals Δ*t*₁ and Δ*t*₂ are such that the time interval Δ*t*₁ extends up to the end of the first period *D*₁ of application of the first heating power *P*₁ and such that, when the starting points of the first period *D*₁, and of the second period *D*₂ are superimposed, the time intervals Δ*t*₁ and Δ*t*₂ have the same end point;
- the slope *a*₁ or *a*₂ of the tangent to the curve (*Tᵢₖ*(*t*))_{*k* = 1 or 2} over each time interval Δ*t*₁ or Δ*t*₂ is determined;
- the value *K_{calc}* of the heat loss coefficient *K* of the premises is deduced on the basis of the slopes *a*₁ and *a₂.*

2. The method as claimed in claim 1, **characterized in that** the time intervals Δ*t*₁ and Δ*t*₂ have the same duration.

3. The method as claimed in either one of claims 1 and 2, **characterized in that** the first time period *D*₁, over which the first heating power *P*₁ is applied, has a duration of less than or equal to 4 hours.

4. The method as claimed in any one of the preceding claims, **characterized in that** the first heating power *P*₁ is such that the parameter $α = 1 - \frac{Δ {T}_{1} \left(0\right) {K}_{ref}}{{P}_{1}}$ is less than or equal to 0.75.

5. The method as claimed in any one of the preceding claims, **characterized in that** the first heating power *P*₁ is such that the parameter $α = 1 - \frac{Δ {T}_{1} \left(0\right) {K}_{ref}}{{P}_{1}}$ is less than or equal to 0.7.

6. The method as claimed in any one of the preceding claims, **characterized in that** the first heating power *P*₁ is such that the parameter $α = 1 - \frac{Δ {T}_{1} \left(0\right) {K}_{ref}}{{P}_{1}}$ is greater than or equal to 0.25, preferably greater than or equal to 0.3.

7. The method as claimed in any one of the preceding claims, **characterized in that**, subsequent to the determination of the value *K_{calc}* of the heat loss coefficient *K* of the premises on the basis of the slopes *a*₁ and *a*₂, the value of the parameter ${α}_{calc} = 1 - \frac{Δ {T}_{1} \left(0\right) {K}_{calc}}{{P}_{1}}$ is computed and it is verified that *α_{calc}* is indeed in the predefined range of values for the parameter *α*.

8. The method as claimed in any one of the preceding claims, **characterized in that** the first heating power *P*₁ comprises a heating power *P*ᵢₘₚ₁ imposed by means of a controlled power source.

9. The method as claimed in any one of the preceding claims, **characterized in that** the method is implemented whilst the premises is unoccupied.

10. The method as claimed in any one of the preceding claims, **characterized in that**, over each of the first and second time periods *D*₁ and *D*₂, the temperature of the outside air *T*_{*e*1} or *T*_{*e*2} is stable.

11. The method as claimed in any one of the preceding claims, **characterized in that**, over each of the first and second time periods *D*₁ and *D*₂, the solar radiation is low, preferably zero.

12. The method as claimed in any one of the preceding claims, **characterized in that** it is carried out in its entirety over a single nocturnal period.

13. The method as claimed in any one of the preceding claims, **characterized in that**, over each of the first and second time periods *D*₁ and *D*₂, any fixed ventilation system fitted to the premises is deactivated.

14. An information recording medium, **characterized in that** it comprises instructions for the implementation of the computation steps of a method for determining the heat loss coefficient *K* of a premises as claimed in any one of the preceding claims when these instructions are executed by an electronic computation unit, the computation steps comprising:
- the computation of the first heating power *P*₁ to be applied over the first time period *D*₁, on the basis of the values of *α,* Δ*T*₁(0) and *K_{ref},*
- the computation, over each time interval Δ*t*₁ or Δ*t*₂, of the slope *a*₁ or *a*₂ on the basis of the measurements of temperature inside the premises *T*_{*i*1} or *T*_{*i*2},
- the computation of the value *K_{calc}* of the heat loss coefficient *K* of the premises on the basis of the slopes *a*₁ and *a*₂*.*

15. The information recording medium as claimed in claim 14, **characterized in that** it furthermore comprises instructions for the control, as a function of input data, of a controlled power source used to apply the first heating power *P*₁ in the premises.

16. A device for the implementation of a method as claimed in any one of claims 1 to 13, **characterized in that** it comprises:
- at least one heating element comprising a controlled power source,
- at least one temperature sensor which measures a temperature inside the premises *Tᵢₖ,*
- at least one power sensor which measures the heating power *Pₖ* delivered in the premises,
- at least one acquisition module for acquiring the measurements of temperature inside the premises *Tᵢₖ*, the measurements of heating power *Pₖ* delivered in the premises, and the temperature of the outside air *Tₑₖ*,
- an electronic computation unit,
- an information recording medium comprising instructions, intended to be executed by the electronic computation unit, for the implementation of the computation steps of the method, that are: the computation of the first heating power *P*₁ to be applied over the first time period *D*₁, on the basis of the values of *α,* Δ*T*₁(0) and *K_{ref}*; the computation, over each time interval Δ*t*₁ or Δ*t*₂, of the slope *a*₁ or *a*₂ on the basis of the measurements of temperature inside the premises *T*_{*i*1} or *T*_{*i*2}; the computation of the value *K_{calc}* of the heat loss coefficient *K* of the premises on the basis of the slopes *a*₁ and *a*₂*.*

17. The device as claimed in claim 16, **characterized in that** the or each heating element is configured to heat the air of the premises.

18. The device as claimed in either one of claims 16 and 17, **characterized in that** the or each temperature sensor is configured to measure the temperature of the air inside the premises.

19. The device as claimed in any one of claims 16 to 18, **characterized in that** the electronic computation unit comprises means of control of the power source of the or of each heating element.

20. The device as claimed in any one of claims 16 to 19, **characterized in that** it comprises at least one box which is situated in a room or zone of the premises and which comprises:
- a power management module, to which is connected the power source of the or of each heating element situated in said room or zone of the premises,
- a temperature measurement module, to which is connected the or each temperature sensor situated in said room or zone of the premises,
- a power sensor, which measures the heating power delivered in said room or zone of the premises,
- connection means between the box and the electronic computation unit, in such a way that the electronic computation unit is able to receive the measurements of temperature and of power and to control the power management module.

21. The device as claimed in claim 20, **characterized in that** it comprises a box in each room or zone of the premises.

22. The device as claimed in either one of claims 20 and 21, **characterized in that** the connection means between the or each box and the electronic computation unit are wireless connection means.
